# EUROPEAN PATENT APPLICATION

(11) **EP 2 589 852 A1**
(43) Date of publication of application: **08.05.2013**
(21) Application number: 11800468.8
(22) Date of filing: 04.02.2011
(51) Int. Cl.: F21S 2/00, F21V 29/00, G02F 1/1333, G02F 1/13357, F21Y 101/02

(54) **LIGHTING APPARATUS AND IMAGE DISPLAY APPARATUS PROVIDED THEREWITH**

(30) Priority: 30.06.2010 JP 2010150277; 30.06.2010 JP 2010150276
(71) Applicant: Sharp Kabushiki Kaisha, Osaka-shi, Osaka 545-8522 (JP)
(72) Inventor: KANDA, Hirofumi, Osaka-shi, Osaka 545-8522 (JP); SUMIKAWA, Masato, Osaka-shi, Osaka 545-8522 (JP); TAKAYAMA, Takeshi, Osaka-shi, Osaka 545-8522 (JP); SAKAI, Koyu, Osaka-shi, Osaka 545-8522 (JP); MORI, Keiko, Osaka-shi, Osaka 545-8522 (JP)
(74) Representative: Müller - Hoffmann & Partner
(86) International application number: PCT/JP2011/052439
(87) International publication number: WO 2012/001998

(57) **Abstract**

Provided are a lighting apparatus capable of improving heat-releasing performance while maintaining structural strength, subduing luminance unevenness due to uneven heat distribution, and allowing the device to be thinner, and an image display apparatus including the lighting apparatus. A heat-conducting member (6) includes: a light-source supporter having a plane facing a light-incident plane; and a plate section having a plane facing a light-emitting plane and a plane facing a heat-releasing member (5), the light-source supporter being adjacent to the plate section. On the light-source supporter, a light source (7) is positioned on the plane facing the light-incident plane so as to face the light-incident plane, the plane of the plate section which faces the heat-releasing member (5) contacts a plane of the heat-releasing member (5) which faces a light guide member, and a centroid of the plate section deviates along a direction parallel to both the light-incident and light-emitting planes.

## Description

### Technical Field

The present invention relates to a lighting apparatus used in an image display apparatus such as a liquid crystal display device.

### Background Art

In general, an image display apparatus such as a liquid crystal display device consists of a display panel for controlling brightness, color etc. of pixels, a backlight apparatus (lighting apparatus) for emitting light to the display panel, and a control circuit for controlling them and a circuit substrate.

The backlight apparatus diffuses light in the image display apparatus so as to emit light to the display panel in a planar manner. The backlight apparatus includes a direct type designed such that light sources are provided at the backside of the backlight apparatus in a distributed manner and an edge-light type (also referred to as "side-light type) designed such that light sources are provided at the side of the backlight apparatus so as to illuminate therefrom. The edge-light type backlight apparatus has a merit that it can be thinner than a direct type one, thereby increasing its commercial value.

Conventional light sources used in image display apparatuses include a cold-cathode tube. Recently, point-light sources such as a light emitting diode (hereinafter LED) has been also used. In general, a light source generates heat as well as light. In the case of LED, light emission due to an electric current generates heat. When this heat increases the temperature of the LED, emission efficiency drops and the lives of devices in an image display apparatus are shortened, which may result, in the worst case, in breakage of the devices and loss of emission.

In the case of edge-light type in particular, light sources serving as heat sources are not distributed at the backside of a backlight apparatus but are collectively provided at the edge portion at the periphery of the backlight apparatus. This structure is disadvantageous in terms of heat release, because heat is easiest to be conducted and released when it is distributed evenly, and heat is more difficult to be conducted and released when it is distributed more uneven.

Recently, an edge-light type is used not only in a small screen (display) such as a mobile phone but also in a large screen (display) such as a television. In general, when enlarging the screen, luminance of the screen cannot be decreased. Therefore, it is necessary to increase the total of light intensity required for a light source, in proportion to the area. That is, it is necessary to increase light intensity in proportion to the square of the length of the screen in a vertical or horizontal direction.

On the other hand, in the edge-light type, increase in the area of a space where a light source can be provided is in proportion to the length of the periphery of the screen (display). That is, the area of a space where a light source can be provided can increase only in proportion to the length of the screen in a vertical or horizontal direction. Consequently, light intensity required for one LED is larger, resulting in greater release of heat.

This situation is a problem common among light sources when they are used not as a direct type but as an edge-light type while enlarging the screen size. Greater heat is generated in a configuration where light is introduced from four sides of the screen than in a configuration where light is introduced from vertical two sides or horizontal two sides. In particular, LCD televisions and displays for personal computers are generally used in a landscape form, and accordingly suffer greater heat when light is introduced from horizontal two sides thereof than when light is introduced from vertical two sides thereof. This causes a situation which conventional heat-releasing methods cannot deal with.

An example of the conventional heat-releasing methods is, in the case of backlight apparatus used for middle-to-small sized screens (display) such as those of mobile phones and car navigation systems, a method for dissipating heat generated from devices, thereby releasing heat. For example, Patent Literature 1 discloses a method in which a substrate mounted with LEDs is directly fixed to a rear frame and a front frame via screws to shorten paths from the substrate to the frames, thereby efficiently conducting and releasing heat. In this method, the rear frame and the front frame serve as heat-releasing members.

With the heavy usage of the edge-light type, there have been conceived many heat-releasing means used in lighting apparatuses. For example, Patent Literatures 3 and 4 describe lighting apparatus in which members are connected with each other via screw clamps. In these lighting apparatuses, L-shaped heat-conducting members are connected to light sources and light-source supporters, so that heat generated in the light sources is conducted to the light-source supporters via the heat-conducting members, and thereafter released via the light-source supporters.

### Citation List

### Patent Literatures

### Patent Literature 1

Japanese Patent Application Publication, Tokukai, No. 2009-3081 (published on January 8, 2009)

### Patent Literature 2

Japanese Patent Application Publication, Tokukai, No. 2008-152109 (published on July 3, 2008) Patent Literature 3

Japanese Patent Application Publication, Tokukai, No. 2006-267936 (published on October 5, 2006) Patent Literature 4

Japanese Patent Application Publication, Tokukai, No. 2010-92670 (published on April 22, 2010)

### Summary of Invention

### Technical Problem

However, in the liquid crystal display device described in Patent Literature 1, since heat is concentrated around LEDs serving as point-light sources, distribution of heat is uneven, resulting in poor conduction of heat to the rear frame and the front frame serving as heat-releasing members. This results in a problem of decreased heat-releasing performance. Furthermore, this liquid crystal display device suffers a problem that enlarging the device in size decreases structural strength of the rear frame and the front frame.

The lighting apparatuses described in Patent Literatures 3 and 4 require many places to be clamped by screws, resulting in complex processes for producing the lighting apparatuses and image display apparatuses including the lighting apparatuses

The present invention was made in view of the foregoing problems. An object of the present invention is to provide a lighting apparatus capable of improving heat-releasing performance while maintaining structural strength, subduing luminance unevenness generated due to uneven distribution of heat, and thinning the device, and an image display apparatus provided with the lighting apparatus. Anther object of the present invention is to provide a lighting apparatus having fewer places to be fixed and thus improving heat-releasing performance and simplifying a production process, and an image display apparatus provided with the lighting apparatus.

### Solution to Problem

As a technique for solving the foregoing problems, Patent Literature 2 for example discloses a heat-releasing technique as follows. In this technique, a display device (backlight apparatus) includes: a display panel unit including a display plane for displaying information and a light-emitting section which has therein a light source for illuminating the display plane from the backside thereof and which generates heat in a linear manner with light emission; a heat-releasing member to which the heat generated from the light-emitting section of the display unit is conducted and which releases the heat; and a heat-conducting section which conducts the heat generated from the light-emitting section to the heat-releasing member and which is designed such that heat from a central portion of a line-shaped heat-generating portion of the light-emitting section is conducted more efficiently than heat from an end portion of the line-shaped heat-generating portion, thereby positively releasing heat from the central portion of the heat-conducting section.

In consideration of the foregoing problems, the inventors of the present invention have diligently studied heat-releasing performance of the display device (backlight apparatus) of Patent Literature 2.

In a general display device (backlight apparatus), a display plane is placed vertically (light sources are positioned vertically, light is emitted in a vertical-linear manner). When light sources are turned on in the display device, heat flows upward due to natural convection, and so heat is likely to be retained at the upper part of the display device.

The display device of Patent Literature 2 is designed such that the central portion of the heat-conducting section conducts heat more efficiently because heat is more likely to be retained at the central portion of the heat-generating portion that generates heat in a linear manner when light is emitted in a linear manner from a light source positioned beside the display plane. However, the heat-releasing technique described in Patent Literature 2 does not seem to be in line with the actual condition of the display device, and consequently cannot effectively release heat at the upper part of the display device. The inventors have found that this raises a problem of uneven distribution of heat in the entire heat-conducting section.

In consideration of the actual condition of the display device that the display plane is placed vertically, the inventors have originally found that designing the area of the upper part of the heat-conducting section to be larger than the area of the lower part thereof allows even distribution of heat in the entire heat-conducting section, thereby improving heat-releasing performance of the display device. Thus, the inventors have completed the present invention.

That is, in order to solve the foregoing problems, a lighting apparatus of the present invention includes: a light source; a light guide member having a light-incident plane and a light-emitting plane perpendicular to the light-incident plane; a heat-releasing member positioned at a backside of the light guide member so as to face the light-emitting plane; and a heat-conducting member for conducting heat from the light source to the heat-releasing member, the heat-conducting member including: a light-source supporter having a plane facing the light-incident plane; and a plate section having a plane facing the light-emitting plane and a plane facing the heat-releasing member, the light-source supporter being adjacent to the plate section, on the light-source supporter, the light source being positioned on the plane facing the light-incident plane in such a manner as to face the light-incident plane, the plane of the plate section which plane faces the heat-releasing member contacting a plane of the heat-releasing member which plane faces the light guide member, and a centroid of the plate section deviating along a direction parallel to both of the light-incident plane and the light-emitting plane.

With the arrangement, the centroid of the plate section deviates along the direction parallel to both of the light-incident plane and the light-emitting plane, so that a plane closer to the side where the centroid deviates has a larger area than the other plane. Accordingly, heat is easier to be released at the plane closer to the side where the centroid deviates. When the lighting apparatus of the present invention is used as a lighting apparatus while the side where the centroid deviates faces upward in a display apparatus used with its display plane placed in a longitudinal position, heat can be efficiently diffused at the upper side where heat is retained, so that heat can be efficiently conducted to the heat-releasing member. This provides excellent thermal conduction from the light source to the heat-releasing member in the lighting apparatus as a whole, resulting in higher heat-releasing performance of the lighting apparatus.

Furthermore, with the arrangement, the heat-conducting member is provided separately from the heat-releasing member, so that it is possible to improve heat-releasing performance while maintaining structural strength.

Furthermore, with the arrangement, heat is diffused by the heat-conducting member, resulting in even thermal distribution at the light source. This reduces variations in temperature of the light source. Consequently, the lighting apparatus of the present invention can subdue luminance unevenness of the light source.

Furthermore, with the arrangement, it is possible to dispose a circuit substrate etc. with use of a part where the centroid of the plate section of the heat-conducting member does not deviate. This allows the lighting apparatus of the present invention to be thinner.

Furthermore, in order to solve the foregoing problems, the inventors of the present invention have diligently studied and found that by uniquely disposing a plurality of fixing sections, it is possible to release heat efficiently from the light source even when there are provided small number of the fixing areas. Thus, the inventors have completed the present invention.

That is, in order to solve the foregoing problems, a lighting apparatus of the present invention includes: a light source; a light guide member having a light-incident plane and a light-emitting plane perpendicular to the light-incident plane; a light source supporting member for positioning the light source in such a manner that the light source faces the light-incident plane; a heat-releasing member which is positioned at a backside of the light guide member so as to face the light-emitting plane and which is connected with the light source supporting member; and a heat-conducting member which contacts the light source supporting member and the heat-releasing member, the heat-conducting member including: a first plate section contacting a plane of the light source supporting member which plane faces the light guide member; and a second plate section contacting a plane of the heat-releasing member which plane faces the light guide member, the light source being positioned, via the first plate section, on a plane of the light source supporting member which plane faces the light-incident plane, at a contact plane between the heat-releasing member and the second plate section, there being provided a plurality of fixing sections for strengthening a contact between the heat-releasing member and the second plate section, the fixing sections being aligned on the contact plane so as to form a straight line on each of a plurality of rows along a first direction, fixing sections aligned on adjacent two rows of the plurality of rows being not arranged to form a straight line along a second direction perpendicular to the first direction.

With the arrangement, heat is diffused by the heat-conducting member, so that heat can be efficiently conducted to the heat-releasing member. This achieves excellent thermal conduction from the light source to the heat-releasing member in the lighting apparatus as a whole. Consequently, the lighting apparatus of the present invention can improve heat-releasing performance.

Furthermore, with the arrangement, the heat-conducting member is provided separately from the heat-releasing member, so that it is possible to improve heat-releasing performance while maintaining structural strength.

Furthermore, with the arrangement, heat is diffused by the heat-conducting member, resulting in even thermal distribution at the light source. This reduces variations in temperature of the light source. Consequently, the lighting apparatus of the present invention can subdue luminance unevenness of the light source.

Furthermore, the arrangement achieves even thermal distribution at the heat-releasing member, thereby further improving heat-releasing performance.

Furthermore, the arrangement can reduce thermal resistance between the heat-releasing member and the second plate section, resulting in excellent thermal conduction from the light source to the heat-releasing member. Consequently, the arrangement can improve heat-releasing performance of the lighting apparatus.

### Advantageous Effects of Invention

As described above, the lighting apparatus of the present invention includes: a light source; a light guide member having a light-incident plane and a light-emitting plane perpendicular to the light-incident plane; a heat-releasing member positioned at a backside of the light guide member so as to face the light-emitting plane; and a heat-conducting member for conducting heat from the light source to the heat-releasing member, the heat-conducting member including: a light-source supporter having a plane facing the light-incident plane; and a plate section having a plane facing the light-emitting plane and a plane facing the heat-releasing member, the light-source supporter being adjacent to the plate section, on the light-source supporter, the light source being positioned on the plane facing the light-incident plane in such a manner as to face the light-incident plane, the plane of the plate section which plane faces the heat-releasing member contacting a plane of the heat-releasing member which plane faces the light guide member, and a centroid of the plate section deviating along a direction parallel to both of the light-incident plane and the light-emitting plane.

Therefore, the lighting apparatus of the present invention can improve heat-releasing performance while maintaining structural strength, subdue luminance unevenness due to uneven thermal distribution, and make the device thinner.

Furthermore, as described above, the lighting apparatus of the present invention includes: a light source; a light guide member having a light-incident plane and a light-emitting plane perpendicular to the light-incident plane; a light source supporting member for positioning the light source in such a manner that the light source faces the light-incident plane; a heat-releasing member which is positioned at a backside of the light guide member so as to face the light-emitting plane and which is connected with the light source supporting member; and a heat-conducting member which contacts the light source supporting member and the heat-releasing member, the heat-conducting member including: a first plate section contacting a plane of the light source supporting member which plane faces the light guide member; and a second plate section contacting a plane of the heat-releasing member which plane faces the light guide member, the light source being positioned, via the first plate section, on a plane of the light source supporting member which plane faces the light-incident plane, at a contact plane between the heat-releasing member and the second plate section, there being provided a plurality of fixing sections for strengthening a contact between the heat-releasing member and the second plate section, the fixing sections being aligned on the contact plane so as to form a straight line on each of a plurality of rows along a first direction, fixing sections aligned on adjacent two rows of the plurality of rows being not arranged to form a straight line along a second direction perpendicular to the first direction.

Therefore, the lighting apparatus of the present invention can improve heat-releasing performance and simplify the production process by reducing fixing areas.

### Brief Description of Drawings

Fig. 1

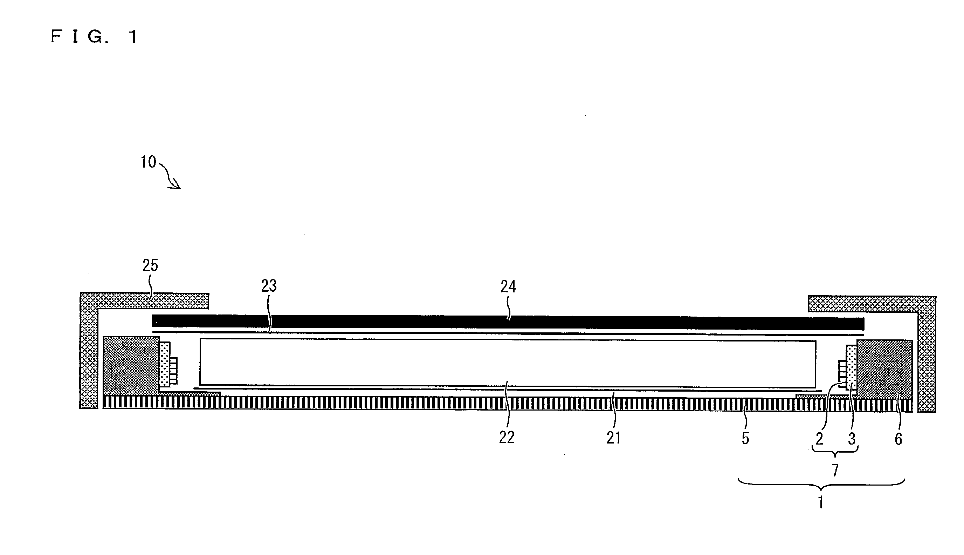

   Fig. 1 is a cross sectional view schematically showing a configuration of a liquid crystal display apparatus including a backlight apparatus in accordance with First Embodiment of the present invention.
Fig. 2

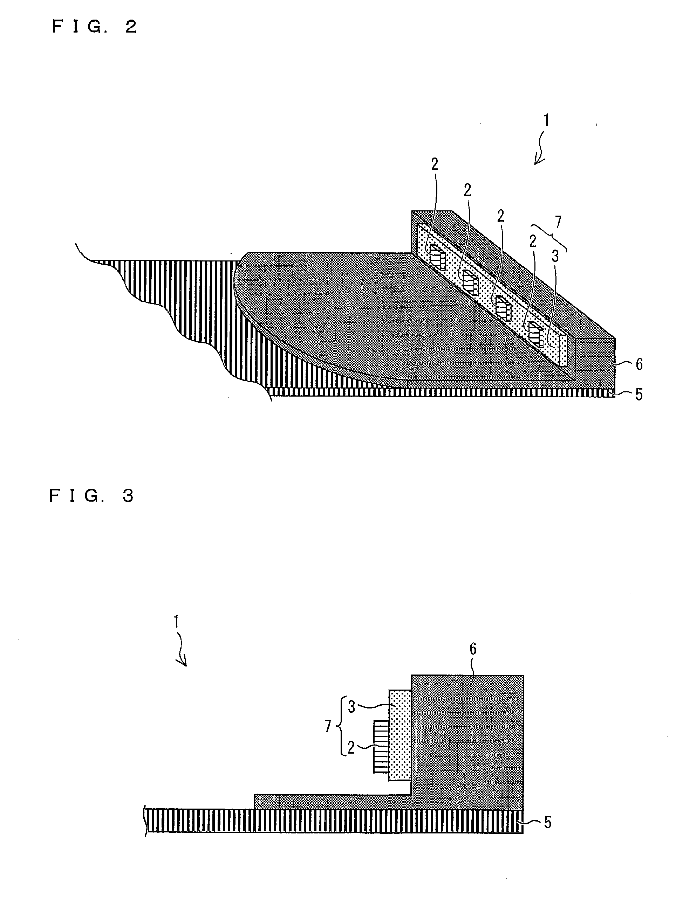

   Fig. 2 is a perspective view showing a configuration at and around a light source of the backlight apparatus in accordance with First Embodiment of the present invention.
Fig. 3
   Fig. 3 is a cross sectional view showing the configuration at and around a light source of the backlight apparatus in accordance with First Embodiment of the present invention.
Fig. 4

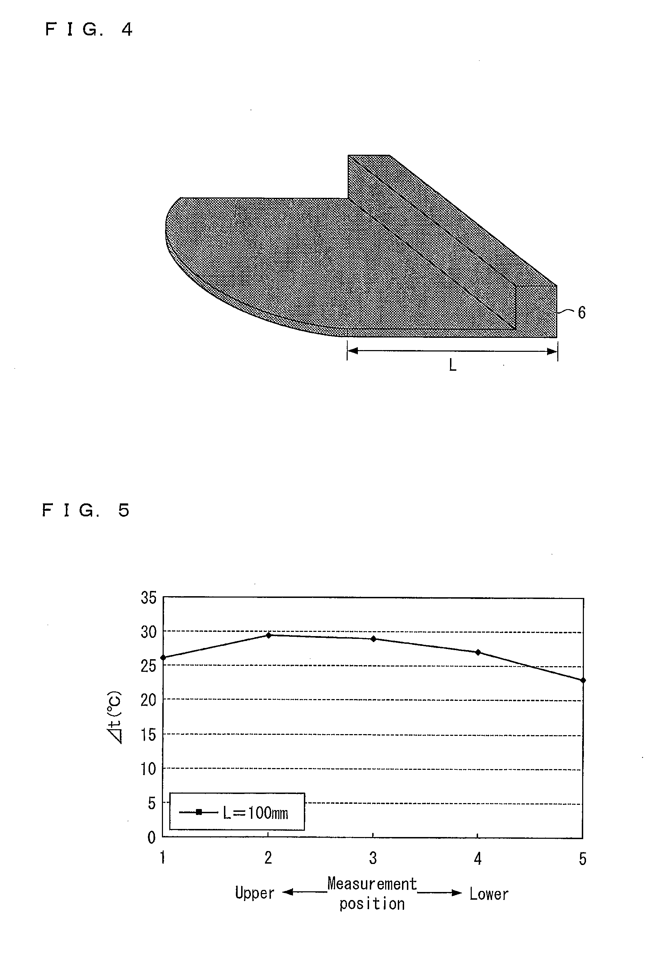

   Fig. 4 is a perspective view showing a configuration of a heat spreader (heat-conducting member) in accordance with First Embodiment of the present invention.
Fig. 5
   Fig. 5 is a graph showing a temperature near the light source of the backlight apparatus in accordance with First Embodiment of the present invention.
Fig. 6

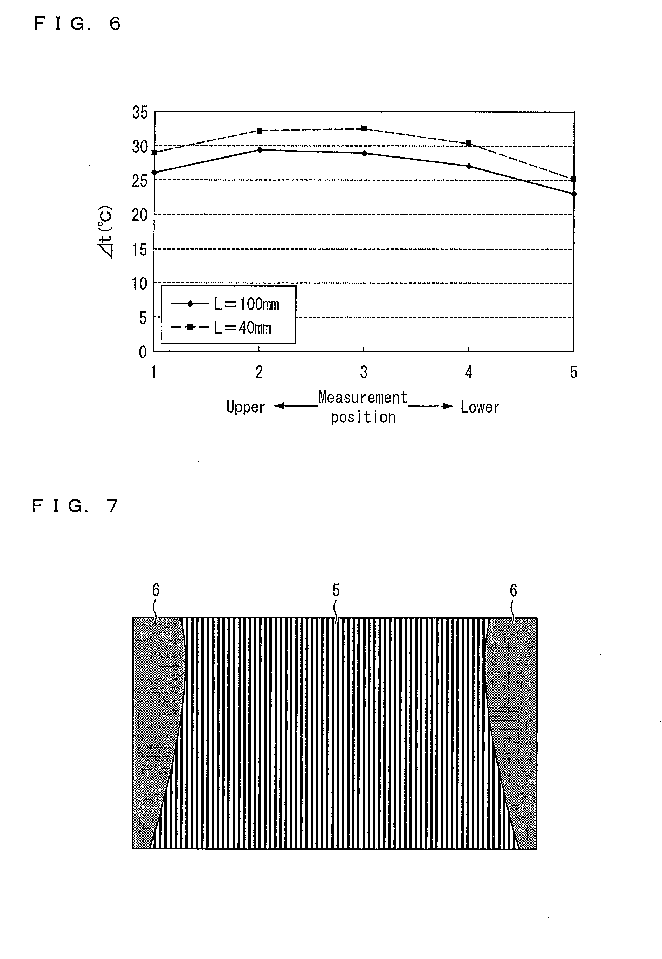

   Fig. 6 is a graph showing a temperature near the light source of the backlight apparatus in accordance with First Embodiment of the present invention.
Fig. 7
   Fig. 7 is a plan view showing a configuration of a heat spreader (heat-conducting member) in accordance with First Embodiment of the present invention.
Fig. 8

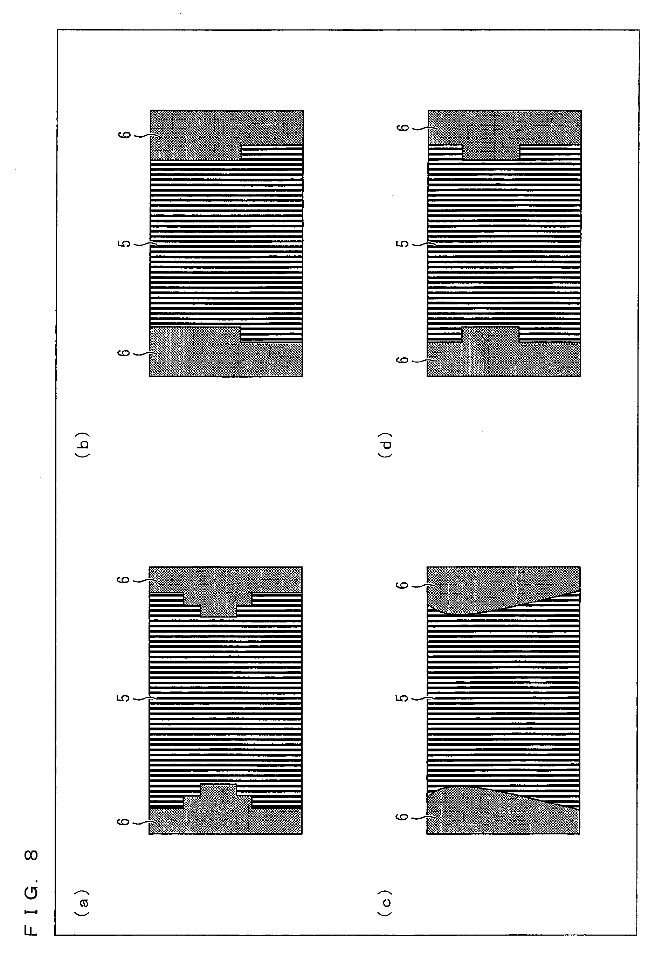

   Fig. 8 is a plan view showing a configuration of a heat spreader (heat-conducting member) in accordance with First Embodiment of the present invention.
Fig. 9

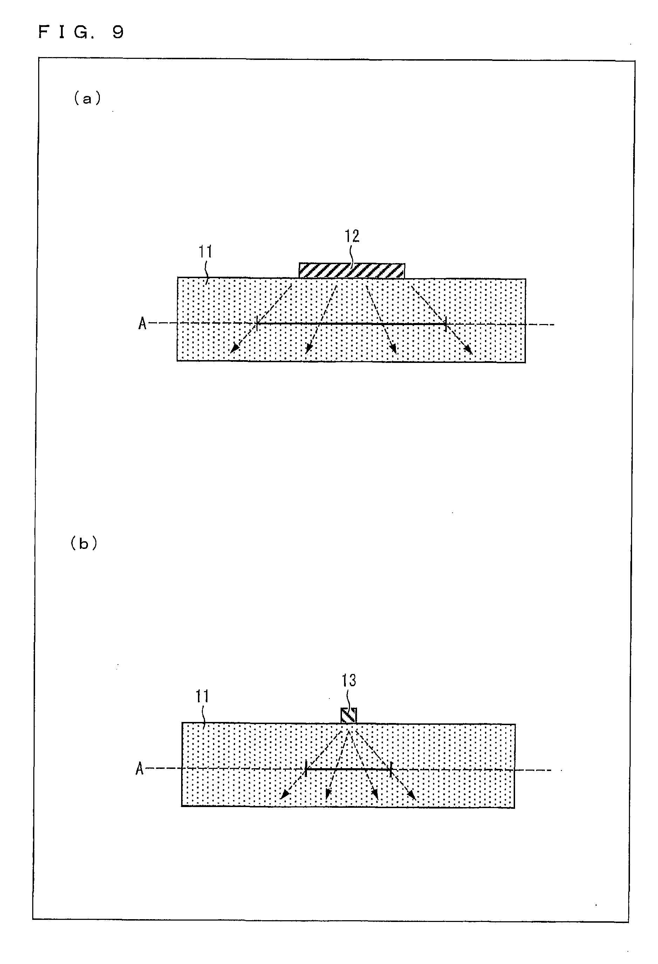

   Fig. 9 is a schematic cross sectional view for explaining a difference in thermal conduction performance between cases of heat sources with different sizes.
Fig. 10

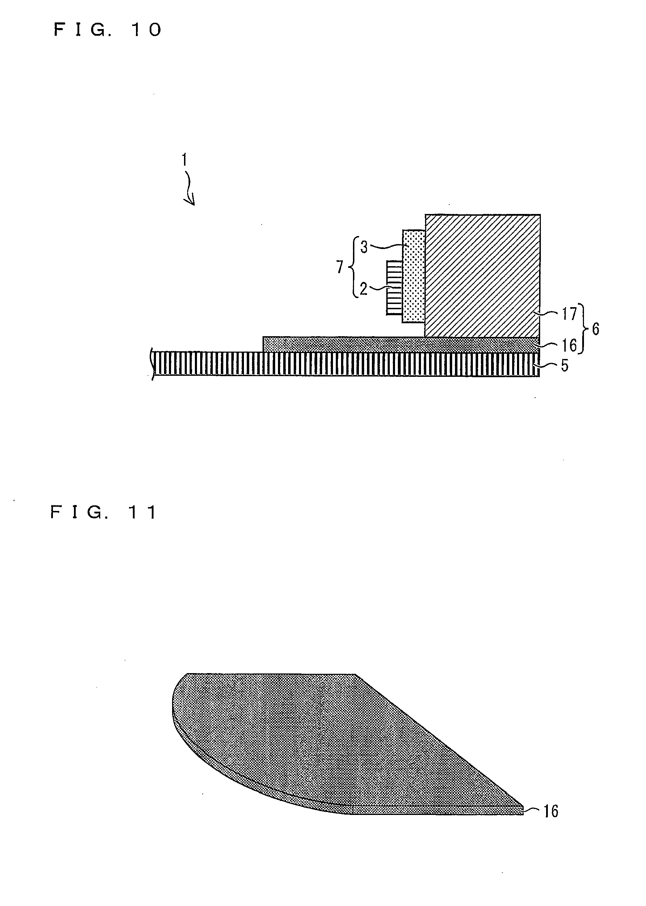

   Fig. 10 is a cross sectional view showing a configuration at and around a light source of a backlight apparatus in accordance with Second Embodiment of the present invention.
Fig. 11
   Fig. 11 is a perspective view showing a configuration of a heat spreader (heat-conducting member) in accordance with Second Embodiment of the present invention.
Fig. 12

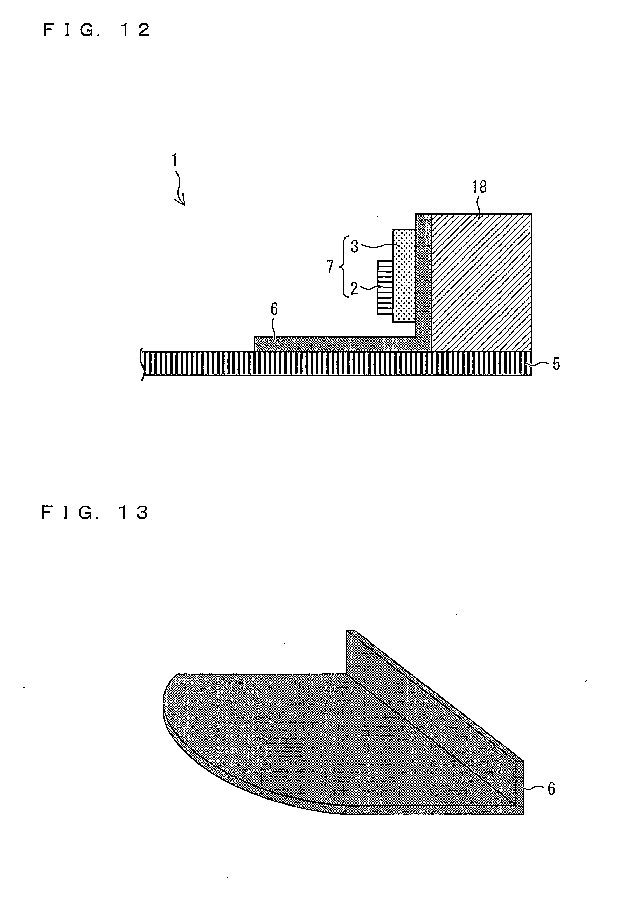

   Fig. 12 is a cross sectional view showing a configuration at and around a light source of a backlight apparatus in accordance with Third Embodiment of the present invention.
Fig. 13
   Fig. 13 is a perspective view showing a configuration of a heat spreader (heat-conducting member) in accordance with Third Embodiment of the present invention.
Fig. 14

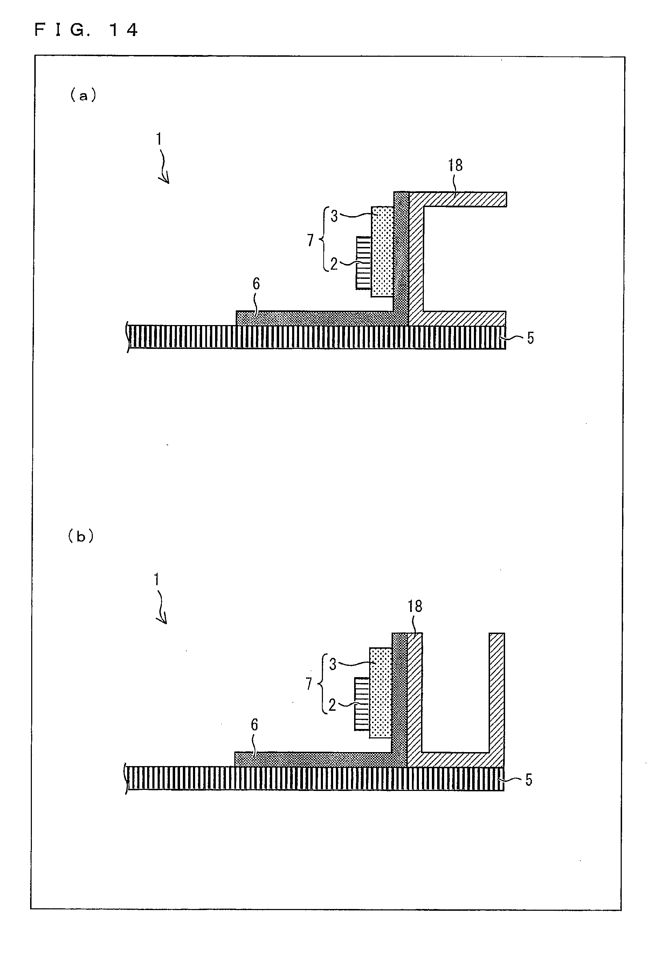

   Fig. 14 is a cross sectional view showing a preferable configuration at and around a light source of the backlight apparatus in accordance with Third Embodiment of the present invention.
Fig. 15

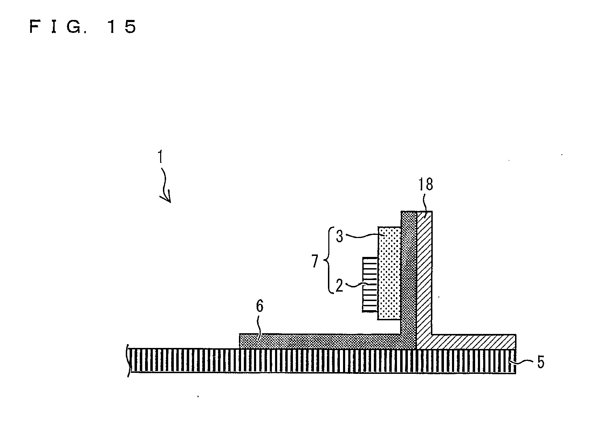

   Fig. 15 is a cross sectional view showing a preferable configuration at and around a light source of the backlight apparatus in accordance with Third Embodiment of the present invention.
Fig. 16

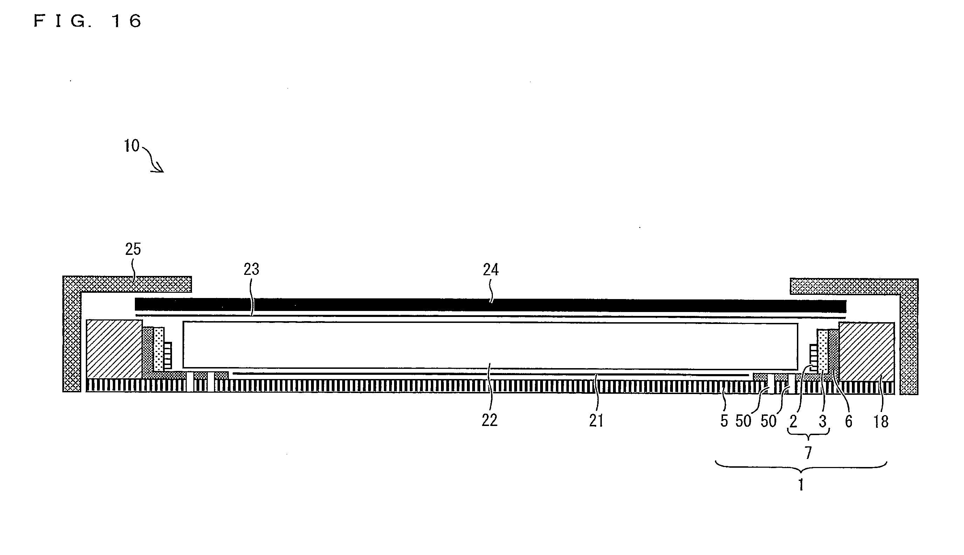

   Fig. 16 is a cross sectional view schematically showing a configuration of a liquid crystal display apparatus including a backlight apparatus in accordance with Fourth Embodiment.
Fig. 17

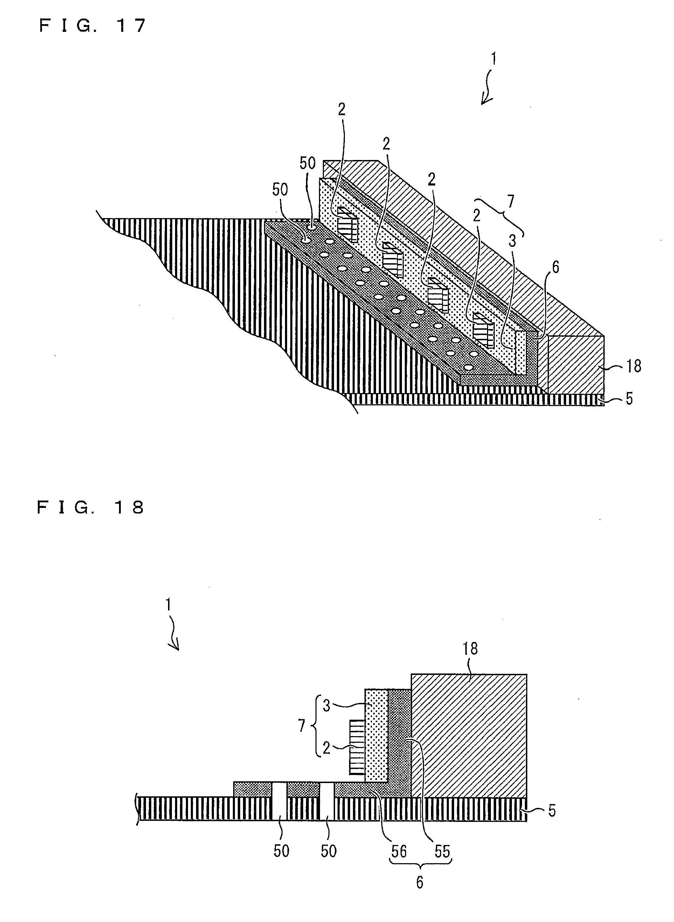

   Fig. 17 is a perspective view showing a configuration at and around a light source of the backlight apparatus in accordance with Fourth Embodiment of the present invention.
Fig. 18
   Fig. 18 is a cross sectional view showing a configuration at and around a light source of the backlight apparatus in accordance with Fourth Embodiment of the present invention.
Fig. 19

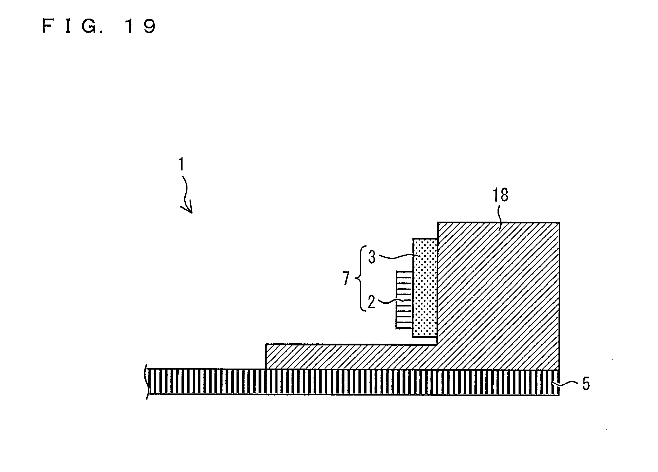

   Fig. 19 is a cross sectional view showing a configuration at and around a light source of a conventional backlight apparatus.
Fig. 20

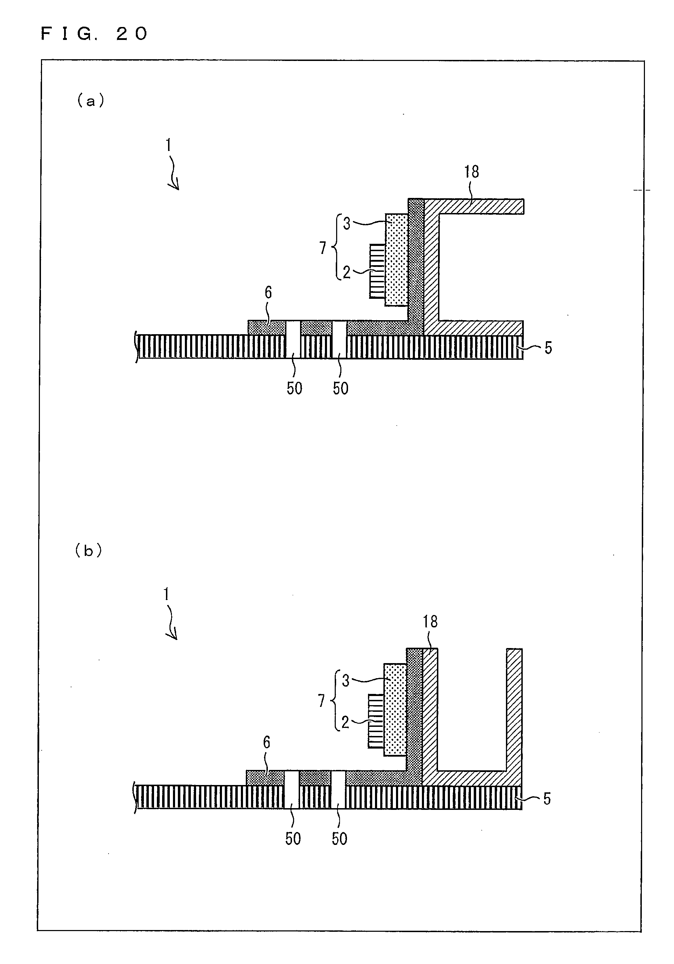

   Fig. 20 is a cross sectional view showing a preferable configuration at and around a light source of the backlight apparatus in accordance with Fourth Embodiment of the present invention.
Fig. 21

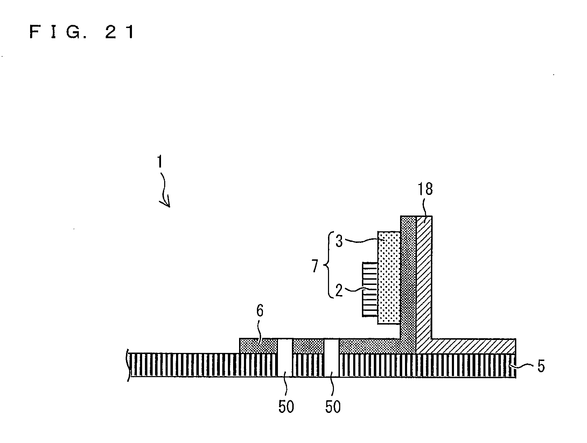

   Fig. 21 is a cross sectional view showing a preferable configuration at and around a light source of the backlight apparatus in accordance with Fourth Embodiment of the present invention.
Fig. 22

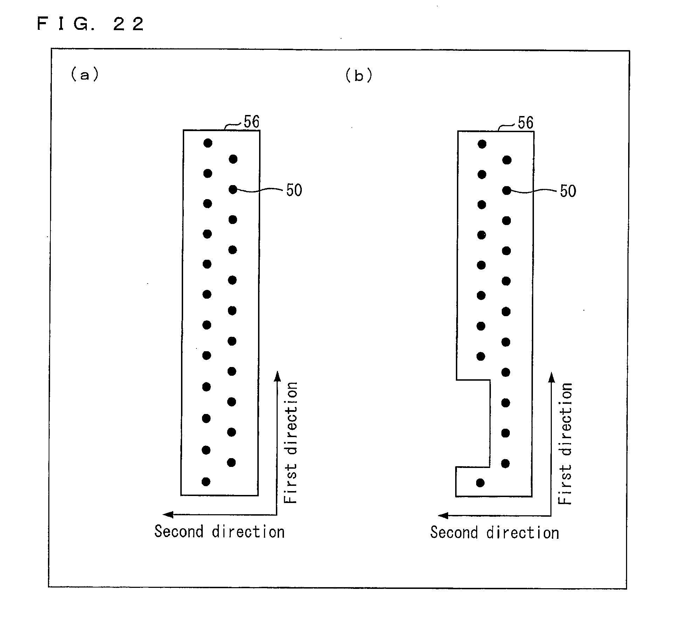

   Fig. 22 is a view schematically showing positions of fixing sections in a case where a second plate section is seen from a side closer to a light-emitting plane.

### Description of Embodiments

The following details embodiments of the present invention. It should be noted that the scope of the present invention is not limited to these descriptions and may be altered in variations other than the examples below, provided that such variations do not exceed the spirit of the present invention.

### [First Embodiment]

### (I) Configuration of lighting apparatus in accordance with the present embodiment

A lighting apparatus in accordance with the present embodiment includes: a light source; a light guide member having a light-incident plane and a light-emitting plane perpendicular to the light-incident plane; a heat-releasing member positioned at a backside of the light guide member so as to face the light-emitting plane; and a heat-conducting member for conducting heat from the light source to the heat-releasing member, the heat-conducting member including: a light-source supporter having a plane facing the light-incident plane; and a plate section having a plane facing the light-emitting plane and a plane facing the heat-releasing member, the light-source supporter being adjacent to the plate section, on the light-source supporter, the light source being positioned on the plane facing the light-incident plane in such a manner as to face the light-incident plane, the plane of the plate section which plane faces the heat-releasing member contacting a plane of the heat-releasing member which plane faces the light guide member, and a centroid of the plate section deviating along a direction parallel to both of the light-incident plane and the light-emitting plane.

That is, the lighting apparatus in accordance with the present embodiment includes the light source and the light guide member, and causes light from the light source to enter the light-incident plane and to be emitted from the light-emitting plane. At the backside of the light guide member seen from the light-emitting plane side, there is provided a function for releasing heat generated in the light source to the outside of the device. The light source is positioned on the heat-conducting member which has a plane perpendicular to the light-emitting plane of the light guide member and which is connected with the heat-releasing member. The light source has an optical axis extending into the light guide member. Since the light source is positioned on the heat-conducting member and the heat-conducting member contacts the heat-releasing member, i.e. the heat-conducting member is connected with the heat-releasing member, heat generated in the light source is successfully conducted to the heat-releasing member, so that the heat is released from the heat-releasing member to the outside of the device.

Furthermore, the lighting apparatus in accordance with the present embodiment is arranged such that when a plane of the plate section of the heat-conducting member which plane faces the light guide member is bisected into two planes in such a manner that a length between two ends of the plate section in a direction parallel to both of the light-emitting plane and the light-incident plane is bisected, one of the two planes has a larger area than the other, and the longest part of said one of the two planes in a direction normal to the light-incident plane is longer than the longest part of said the other.

Furthermore, the lighting apparatus in accordance with the present embodiment may include a housing made of a heat-releasing member.

Furthermore, since the lighting apparatus in accordance with the present embodiment requires many kinds of members such as a speaker, an external connecting terminal, and a power switch to be provided therein, it is necessary to design the area of a heat-releasing plate to be as small as possible. In this design, the area of the heat-releasing plate is reduced at the lower part with smaller heat generation below the central portion and other members are mounted on the lower part, so that heat-releasing performance is ensured without enlarging the size.

Furthermore, it is preferable to arrange the lighting apparatus in accordance with the present embodiment such that the light-source supporter and the plate section are formed integrally. Furthermore, it is preferable to arrange the lighting apparatus in accordance with the present embodiment such that when both of the light-incident plane and the light-emitting plane are positioned to be perpendicular to a horizontal plane, the centroid deviates in a direction opposite to a gravitational direction. Furthermore, it is preferable to arrange the lighting apparatus in accordance with the present embodiment such that thermal resistance per unit length of the heat-conducting member in a direction along a contact plane between the heat-conducting member and the heat-releasing member is smaller than thermal resistance per unit length of the heat-releasing member in a direction along the contact plane.

An explanation is made below specifically with reference to Figs. 1 to 10. Fig. 1 is a cross sectional view schematically showing a configuration of a liquid crystal display device (image display apparatus) 10 including a backlight apparatus (lighting apparatus) 1 in accordance with the present embodiment. Fig. 2 is a perspective view showing a configuration at and around a light source 7 of the backlight apparatus 1 in accordance with the present embodiment. Figs. 3 and 4 are cross sectional views showing configurations at and around the light source 7.

As shown in Figs. 1 to 4, the backlight apparatus 1 in accordance with the present embodiment mainly includes the light source 7 (a substrate 3 on which a plurality of point light sources (light-emitting elements) 2 are mounted), a heat spreader (heat-conducting member) 6 that fixes the light source 7, a chassis (heat-releasing member) 5 connected to the heat spreader 6, and a light-guiding plate (light-guiding member) 22 for emitting light coming from the light source 7. Possible technique to connect individual members (parts) include, in addition to screw clamp, fixing by adhesive tape, adhesive agent etc., fitting, and pressure welding.

As shown in Fig. 1, the liquid crystal display device 10 in accordance with the present embodiment mainly includes the backlight apparatus 1, a reflective sheet 21, an optical sheet 23, a liquid crystal panel 24, and a bezel (outer frame) 25.

The backlight apparatus 1 in accordance with the present embodiment is intended to improve heat-conducting performance when heat from the light source 7 is conducted to the heat-releasing member 5. This intention is achieved by designing the backlight apparatus 1 such that heat is diffused in a heat-path and heat distribution is uniformed. The following details individual members of the backlight apparatus 1.

### <Light source (light-emitting element and substrate)>

The light source 7 employed in the backlight apparatus 1 in accordance with the present embodiment may be constituted by the point-light sources (light-emitting elements) 2 only or may be constituted by mounting the point-light sources 2 on the substrate 3. In Figs. 1-3 and 10, the light source 7 is constituted by mounting the point-light sources 2 on the substrate 3.

In the backlight apparatus 1 in accordance with the present embodiment, the light source 7 serves as a heat source, which necessitates heat release.

Examples of the point-light sources 2 employed in the backlight apparatus 1 in accordance with the present embodiment include light-emitting diodes (LED) and cold-cathode fluorescent lamp (CCFL). Preferable examples of the light-emitting diode (LED) include a white LED light source, RGB-LED (light-emitting diode made by molding R, G, B chips in one package) light source, a multi-color LED light source, and a laser light source.

The substrate 3 employed in the backlight apparatus 1 in accordance with the present embodiment is not particularly limited as long as the substrate 3 can mount the point-light source 2. A preferable example of the substrate 3 is a metal substrate whose base material is aluminum (A1), copper (Cu) etc. with high thermal conductivity.

In the present embodiment, "mount" means providing an electronic member such as a light source on a substrate. In the present embodiment, the technique to fix a light source etc. on a substrate is not particularly limited, and may be soldering for example.

Heat conducted to the backside of the substrate 3 is conducted to the heat spreader 6 in contact with the substrate 3. Here, thermal resistance occurs at the interface between the substrate 3 and the heat spreader 6. In order to make this thermal resistance as small as possible, it is important to enlarge the area where the heat spreader 6 and the substrate 3 contacts each other and ensure adhesiveness between the heat spreader 6 and the substrate 3.

In the structure in accordance with the present embodiment, the heat spreader 6 is provided at the backside of the substrate 3 on which the point-light source 2 serving as a heat source is mounted and so the heat path between the heat source and the heat spreader 6 is shortest. Accordingly, this structure has excellent heat-releasing property.

### <Heat spreader (heat-conducting member)>

The heat spreader 6 employed in the backlight apparatus 1 in accordance with the present embodiment is constituted by a frame (light-source supporter) 17 and a heat-conducting plate (plate section) 16 that are adjacent to each other (see Fig. 10). The frame 17 has a plane facing a light-incident plane. The heat-conducting plate 16 has planes facing a light-emitting plane and the heat-releasing member 5, respectively. In the present embodiment, as shown in Figs. 1 to 4, the heat spreader 6 is constituted by integrally forming the frame 17 and the heat-conducting plate 16. A heat spreader 6 constituted by separately forming the frame 17 and the heat-conducting plate 16 will be described in later-mentioned Second Embodiment.

The heat spreader 6 employed in the backlight apparatus 1 in accordance with the present embodiment is not particularly limited as long as the heat spreader 6 has structural strength and high thermal conductivity.

Fig. 4 shows a shape of the heat spreader 6 in accordance with the present embodiment. When a lighting apparatus is placed vertically, the near side of the heat spreader 6 shown in Fig. 4 (a part with a length of L) is placed at the upper side of the lighting apparatus, and the far side of the heat spreader 6 shown in Fig. 4 is placed at the lower side of the lighting apparatus.

In the present embodiment, as a structure for further improving thermal conductivity, the heat spreader 6 is designed to have an L-shape in a cross section (plane shown in Fig. 3). This structure enables the heat spreader 6 and the chassis 5 to contact at a wider area, thereby further dropping thermal resistance at the interface.

It is desirable that the prism-shaped part of the heat spreader 6 which part is positioned at the backside of the substrate 3 is a prism with a cross section of approximately 7 mm square for example, and has a larger cross section than the substrate 3. The thickness of a thin plate part (heat-conducting plate, plate section) of the heat spreader 6 which part extends in parallel to the chassis 5 is approximately 2 mm for example. The length L of the thin plate part in a lateral direction is, in a case of a 60-inch or more liquid crystal display device, approximately 100 mm for example, which allows further efficient release of heat to the outside. The prism-shaped part and the thin plate part constitute the L-shaped heat spreader 6.

Furthermore, as shown in Fig. 4, an end of the thin plate of the heat spreader 6 which end is closer to the center of the lighting apparatus is shaped such that the length of an end a little below the upper side (near side) of the heat spreader 6 is longer than the length of an end at the lower side of the heat spreader 6. The reason for this shape is explained below with reference to Figs. 5 and 6.

Fig. 5 shows the result of temperature distribution of individual LEDs (point-light source) in a case where a 68-inch liquid crystal display device with the structure shown in Fig. 1 is used and the length L of the L-shaped heat spreader 6 shown in Fig. 4 in an incident direction is set to 100 mm. The lateral axis of the graph shown in Fig. 5 indicates the position where the temperature of the LED was measured, and the longitudinal axis indicates the measured temperature. The left side of the lateral axis of the graph indicates the upper-side point where the temperature of the LED was measured and the right side of the lateral axis of the graph indicates the lower-side point where the temperature of the LED was measured.

It is found from the result that the temperature of the LED at the upper side of the lighting apparatus is higher than the temperature of the LED at the lower side. This is because when the LED is lightened as a liquid crystal display device, heat goes upward to form natural convection, accompanied by upward convection of heat from individual LEDs. This worsens release of heat from the LED at the upper side, so that the temperature of the LED at the lower side is relatively lower than the temperature of the LED at the upper side.

It is found from the result of Fig. 5 that the LED with the highest temperature is not the LED at the top but the LED a little below the top. This is because the LED at the top does not have an upwardly adjacent LED and so heat generated from the LED at the top is relatively easy to be released to the outside, so that heat is most likely to be retained in the LED just below the top and the temperature of that LED is likely to increase.

Fig. 6 shows the result of temperature distribution of individual LEDs in a case where the length of the thin plate part of the L-shaped heat spreader 6 in an incident direction from a light source is set to 40 mm which is shorter than that of the Fig. 5 measurement. It is found from the result that in the case where the length of the thin pate part is shorter, the temperature of the LEDs as a whole increases by 2-3 °C while maintaining the temperature distribution of the LEDs at the upper side and the lower side. Therefore, by extending the length of the thin plate part of the L-shaped heat spreader 6, the influence of thermal resistance can be made as small as possible and efficient heat release can be achieved, so that the temperature of the heat source can be dropped.

It is obvious from the results shown in Figs. 5 and 6 that extending the length of the thin plate part of the L-shaped heat spreader 6 allows dropping the temperature of the heat source. In consideration of this, in order to make variations in light output of the LEDs even, the length of the thin plate part of the L-shaped heat spreader 6 is made longer at the part where the LED has higher temperature than at the part where the LED has lower temperature. This allows even release of heat from the heat source.

Based on these results, the 68-inch liquid crystal display device was evaluated. In this case, by setting the length of the most longest part of the heat spreader 6 which part is positioned a little below the top to be 100 mm and setting the length of the lower side of the heat spreader 6 which side is shortest to be approximately 30 mm, the temperature distribution of the LEDs was even.

Fig. 7 shows the shapes of the heat spreader 6 and the chassis 5 seen from the above. (a) to (d) of Fig. 8 show specific examples in which the shape of the heat spreader 6 shown in Fig. 7 is changed in a direction perpendicular to a direction in which light sources are aligned. In Fig. 7 and (a) to (d) of Fig. 8, the upper side in the drawings corresponds to the upper side of a liquid crystal display device and the lower side in the drawings corresponds to the lower side of the liquid crystal display device. As shown in (a) to (d) of Fig. 8, by setting the length of a part of the heat spreader 6 on which part heat sources such as LEDs have higher temperature to be longer than the length of a part of the heat spreader 6 on which part heat sources have lower temperature, it is possible to release heat without causing heat distribution at the aligned light sources. Furthermore, a circuit substrate etc. can be contained with use of a space at the shorter part of the heat spreader 6. Accordingly, in the case of the liquid crystal display apparatus, an empty space can be used effectively, allowing the liquid crystal display apparatus to be thinner.

### <Chassis (heat-releasing member) >

The chassis 5 employed in the backlight apparatus 1 in accordance with the present embodiment is not particularly limited as long as the chassis 5 has heat-releasing performance and structural strength. Preferable examples of the chassis 5 employed in the backlight apparatus 1 in accordance with the present embodiment include aluminum alloy, steel plate, and stainless. Examples of the aluminum alloy include A5052 (tensile strength: 195 N/mm², thermal conductivity: 138 W/m·K) and A6063 (tensile strength: 185 N/mm², thermal conductivity: 209 W/m·K). An example of the steel plate is SECC (thermal conductivity: 70W/m·K). An example of the stainless is SUS (thermal conductivity: 15W/m·K).

### <Light guide plate (light guide member)>

The light guide plate 22 employed in the backlight apparatus 1 in accordance with the present embodiment is not particularly limited as long as the light guide plate 22 has a light-incident plane and a light-emitting plane perpendicular to the light-incident plane and can emit light coming from the light sources 7.

### <Other members>

The reflective sheet 21, the optical sheet 23, the liquid crystal panel 24, and the bezel 25 in the liquid crystal display device 10 in accordance with the present embodiment may be those included in a conventional and publicly known liquid crystal display device.

### <Technique of thermal conduction>

The following specifically explains the technique of thermal conduction in the backlight apparatus 1 in accordance with the present embodiment with reference to Figs. 1 to 4 and (a) and (b) of Fig. 9. In the following explanation, a case where the light source 7 is obtained by mounting the point-light sources 2 on the substrate 3 is employed as an example.

Heat generated from the point-light sources 2 such as LEDs is firstly conducted to the substrate 3. The thickness of the substrate 3 is approximately 1-2 mm in general in a case of a metal substrate. The length of the substrate 3 in a long side direction is approximately 300-1200 mm in general, although the length of the substrate 3 in a long side direction depends on the screen size because the length is equal to the length of a side of the screen. A plurality of point-light sources 2 are aligned in the long side direction of the substrate 3. The size of the point-light source 2 is a rectangle (oblong, square etc.) whose side ranges from approximately 3 mm to 10 mm in length.

In this case, thermal conduction in a thickness direction of the substrate 3 is relatively good because heat is conducted in a range of the size of the point-light source 2. However, thermal conduction in the long side direction of the substrate 3 is made only in a range of the thickness direction of the substrate 3, and accordingly inferior compared with thermal conduction in the thickness direction. Consequently, thermal distribution appears depending on the position etc. of the LEDs.

Specifically, the LEDs at and around the center are packed together by having other LEDs be present on both sides of the LEDs, thereby making the heat persist within that area. On the other hand, the LEDs disposed on the edges have no heat source on one side, and therefore the heat easily disperses. As a result, the heat generated by the point-light sources 2 is distributed in the long side direction of the substrate 3. Moreover, in general, the LED changes in its light-emitting efficiency in response to its temperature. Accordingly, if all the LEDs are operated while there is a variation in the heat generated state between LEDs, this variation causes generation of luminance unevenness in the backlight apparatus 1 due to the different light-emitting states, which is not preferable at this state. The present embodiment allows for resolving this state. The principle of this is as described below.

In the present embodiment, the substrate 3 contacts the heat spreader 6. The heat spreader 6 is made of a material with high thermal conductivity as described above. Accordingly, heat is sufficiently diffused in the heat spreader 6. Consequently, the temperature of the substrate 3 is made even, and variations in the operation temperature of the LEDs are reduced. This allows subduing luminance unevenness in the backlight apparatus 1.

Furthermore, even thermal distribution can reduce thermal resistance. The reason why thermal conductivity is worsened when thermal distribution is uneven is explained as follows.

(a) and (b) of Fig. 9 are cross sectional views showing cases where heat sources 12 and 13 with different sizes are put on a thermal conductor 11, respectively. The thermal conductor 11 in (a) of Fig. 9 and the thermal conductor 11 in (b) of Fig. 9 are identical and have the same thermal conductivity, and accordingly have the same thermal resistance per unit area.

In the cases where the heat sources 12 and 13 are given the same amount of heat per unit time, heat is conducted in the respective heat conductors 11 in accordance with the 45 degree rule. However, a cross section A of the thermal conductor 11 in (b) of Fig. 9 has a narrower area that contributes to thermal conduction than a cross section A of the thermal conductor 11 in (a) of Fig. 9 has, so that heat is concentrated in the narrower area in (b) of Fig. 9. Since thermal resistance per unit area of the thermal conductor 11 is equal between (a) of Fig. 9 and (b) of Fig. 9, the case of (b) of Fig. 9 with a smaller area contributing to thermal conduction than the case of (a) of Fig. 9 has higher thermal resistance than the case of (a) of Fig. 9. This shows that the difference in temperature between the upper side and the lower side of the thermal conductor 11 is larger in the case of (b) of Fig. 9 than the case of (a) of Fig. 9. This results in poor thermal conduction in the case of (b) of Fig. 9.

Hence, it is found that, in improving the thermal conduction of the heat conductor 11 when a same amount of heat is applied per unit time, heat is better conducted by broadening the area to which heat is applied for conducting the heat. Moreover, it can be observed that the heat is best conducted when the distribution of the heat is even.

In the present embodiment, heat conducted from the substrate 3 to the heat spreader 6 is conducted to the chassis 5 while maintaining even distribution. Accordingly, heat is conducted to the chassis 5 in a good thermal conduction state. When thermal conduction to the chassis 5 is in a good state, the temperature of the chassis 5 increases and has a larger difference from the atmospheric temperature, resulting in higher heat exchange efficiency. This allows the backlight apparatus 1 to have higher heat-releasing performance. Furthermore, by designing the thermal resistance of the heat spreader 6 in a plane direction to be smaller than the thermal resistance of the chassis 5 in a plane direction, the thermal distribution of the chassis 5 in a plane direction is made even, resulting in higher heat-releasing performance.

It is desirable to insert a thermal conduction assisting member such as resin sheet, metal sheet, and grease between individual members of the backlight apparatus 1, because the thermal conduction assisting member allows further dropping thermal resistance of the interface.

In the present embodiment, an explanation was made as to two-side incident edge light type. The same is applicable to four-side incident type.

In the present embodiment, an explanation was made as to a case where the lighting apparatus is used as a backlight apparatus in a liquid crystal display device. Alternatively, the lighting apparatus in accordance with the present embodiment may be used as light on the ceiling.

### (II) Method for producing lighting apparatus in accordance with the present embodiment

The lighting apparatus in accordance with the present embodiment is produced by connecting the light source 7 (point-light sources 2 and the substrate 3), the heat spreader 6, and the chassis 5 in this order. Thereafter, the light guide plate 22 is positioned. Possible technique to connect individual members include, in addition to screw clamp, fixing by adhesive tape, adhesive agent etc., fitting, and pressure welding.

### [Second Embodiment]

The following explains the present embodiment with reference to Figs. 10 and 11. For convenience of explanation, members having the same functions as those explained in First Embodiment with reference to the drawings are given the same reference signs and explanations thereof are omitted. Furthermore, terms already explained in First Embodiment are not explained here.

### (I) Configuration of lighting apparatus in accordance with the present embodiment

A lighting apparatus in accordance with the present embodiment is different from the lighting apparatus in accordance with First Embodiment in that the heat spreader 6 is not "constituted by integrally forming the frame 17 and the heat-conducting plate 16" but "constituted by separately forming the frame 17 and the heat-conducting plate 16".

Specifically, Fig. 10 is a cross sectional view schematically showing a configuration of a liquid crystal display device (image display apparatus) 10 including a backlight apparatus (lighting apparatus) 1 in accordance with the present embodiment. Fig. 11 shows the shape of the heat spreader 6 in accordance with the present embodiment.

### <Heat spreader (heat-conducting member)>

As shown in Fig. 10, the heat spreader 6 employed in the backlight apparatus 1 in accordance with the present embodiment includes a frame (light-source supporter) 17 having a plane facing a light-incident plane, and a heat-conducting plate (plate section) 16 having a plane facing the light-incident plane and a plane facing a heat-releasing member 5. The frame 17 and the heat-conducting plate 16 are adjacent to each other. In the present embodiment, the frame 17 and the heat-conducting plate 16 are formed separately.

### <Frame (light-source supporter)>

The frame 17 employed in the backlight apparatus 1 in accordance with the present embodiment is not particularly limited as long as the frame 17 has structural strength. Preferable examples of the frame 17 employed in the backlight apparatus 1 in accordance with the present embodiment include aluminum alloy, steel plate, and stainless. Examples of the aluminum alloy include A5052 (tensile strength: 195 N/mm², thermal conductivity: 138 W/m·K) and A6063 (tensile strength: 185 N/mm², thermal conductivity: 209 W/m·K). An example of the steel plate is SECC (thermal conductivity: 70W/m·K). An example of the stainless is SUS (thermal conductivity: 15W/m·K).

The shape of the frame 17 employed in the backlight apparatus 1 in accordance with the present embodiment is a quadrangular prism having a rectangular or square cross section (plane shown in Fig. 3) etc.

The frame 17 has a plane perpendicular to a light-emitting plane of the light guide plate 22. The frame 17 may surround the light guide plate 22 by the plane perpendicular to the light-emitting plane, or may not surround.

### <Heat-conducting plate (plate section)>

The heat-conducting plate 16 employed in the backlight apparatus 1 in accordance with the present embodiment is one with high thermal conductivity. The thermal conductivity of the heat-conducting plate 16 is preferably not less than 200 W/m·K and not more than 1000 W/m·K. The thermal conductivity of the heat-conducting plate 16 being less than 200 W/m·K is not preferable because the thermal conductivity is insufficient and heat does not spread over the heat-releasing member, which results in a smaller area constituting to heat release and thus shortage of heat-releasing performance. On the other hand, the thermal conductivity of the heat-conducting plate 16 being more than 1000 W/m·K is not preferable because the heat-conducting plate 16 with such a thermal conductivity is expensive, soft and tricky to use, varies across the ages etc.

In the present embodiment, "thermal conductivity" indicates a value obtained by dividing an amount of heat that flows per unit time through unit area perpendicular to flow of heat by temperature difference per unit length (temperature gradient) (W/m·K).

Furthermore, in the present embodiment, "thermal resistance" is a value representing difficulty of temperature to increase, and indicates an increasing amount of temperature with respect to an amount of heat per unit time (°C/W).

The heat-conducting plate 16 employed in the backlight apparatus 1 in accordance with the present embodiment does not require structural strength and accordingly may be made of a material with high thermal conductivity. Examples of the material with high thermal conductivity include aluminum, copper, carbon, and silver. As pure aluminum, A1050 (thermal conductivity: 225 W/m·K) etc. may be used. As pure copper, C1100 (thermal conductivity: 391 W/m·K) etc. may be used. Other than these, it is also possible to use materials such as a sheet containing fillers such as carbon, silver etc., and a metal plate having a built-in heat pipe.

The thermal conductivity of the heat-conducting plate 16 employed in the backlight apparatus 1 in accordance with the present embodiment is larger than that of the frame 17 and the chassis 5. The thickness of the heat-conducting plate 16 is preferably approximately 0.5-2 mm.

An example of the shape of the heat-conducting plate 16 employed in the backlight apparatus 1 in accordance with the present embodiment is a plate shape shown in Fig. 10.

It is desirable that the area where the heat-conducting plate 16 contacts the chassis 5 is larger than the area where the heat-conducting plate 16 contacts the frame 17. The frame 17 has a prism shape etc. because it requires mechanical strength. Consequently, increasing the area where the frame 17 contacts the chassis 5 without the heat-conducting plate 16 would increase the volume of the frame 17, resulting in increase in the cost and weight. In contrast thereto, use of the heat-conducting plate 16 can achieve a sufficiently small thickness of approximately 5-2 mm even when the volume of the heat-conducting plate 16 is added, resulting in only small increase in the cost and weight. Thus, by increasing the area where the heat-conducting plate 16 contacts the chassis 5, it is possible to reduce thermal resistance of the interface.

### (II) Method for producing lighting apparatus in accordance with the present embodiment

The Method for producing a lighting apparatus in accordance with the present embodiment is the same as the method for producing a lighting apparatus in accordance with First Embodiment above except that the heat spreader 6 is produced by separately forming the frame 17 and the heat-conducting plate 16 in the present embodiment.

### [Third Embodiment]

The following explains the present embodiment with reference to Figs. 12 to 15. For convenience of explanation, members having the same functions as those explained in First Embodiment with reference to the drawings are given the same reference signs and explanations thereof are omitted. Furthermore, terms already explained in First Embodiment are not explained here.

### (I) Configuration of lighting apparatus in accordance with the present embodiment

Compared with the lighting apparatus in accordance with First Embodiment, a lighting apparatus in accordance with the present embodiment further includes a reinforcing member for reinforcing a heat spreader 6.

Specifically, Fig. 12 is a cross sectional view schematically showing a configuration of a liquid crystal display device (image display apparatus) 10 including a backlight apparatus (lighting apparatus) 1 in accordance with the present embodiment. Fig. 13 shows the shape of the heat spreader 6 in accordance with the present embodiment.

### <Reinforcing member>

A reinforcing member 18 employed in the backlight apparatus 1 in accordance with the present embodiment is not particularly limited as long as the reinforcing member 18 has structural strength. Preferable examples of the reinforcing member 18 employed in the backlight apparatus 1 in accordance with the present embodiment include aluminum alloy, steel plate, and stainless. Examples of the aluminum alloy include A5052 (tensile strength: 195 N/mm², thermal conductivity: 138 W/m·K) and A6063 (tensile strength: 185 N/mm², thermal conductivity: 209 W/m·K). An example of the steel plate is SECC (thermal conductivity: 70W/m·K). An example of the stainless is SUS (thermal conductivity: 15W/m·K).

The shape of the reinforcing member 18 employed in the backlight apparatus 1 in accordance with the present embodiment is a quadrangular prism having a rectangular or square cross section (plane shown in Fig. 12) etc.

### <Another Example>

Another Example of the backlight apparatus 1 in accordance with the present embodiment is one whose reinforcing member 18 is changed in shape. The following specifically explains Another Example with reference to (a) and (b) of Fig. 14 and Fig. 15.

When the reinforcing member 18 has a polygonal prism shape with a U-shaped cross section (plane shown in Figs. 14 and 15) as shown in (a) and (b) of Fig. 14 or a polygonal prism shape with an L-shaped cross section as shown in Fig. 15, the material cost can be reduced compared with the case of a quadrangular prism shape with a rectangular or square cross section. Besides, bending a flat plate to have the U-shape or the L-shape allows increasing mechanical strength.

Furthermore, by designing thermal resistance in a longitudinal direction of the heat spreader 6 (in long side directions of the substrate 3 and the frame 17) to be smaller than thermal resistance in the same direction of the chassis 5, heat is conducted to the chassis 5 after thermal distribution in the longitudinal direction of the heat spreader 6 gets even, even when the frame 17 has a smaller cross sectional area than the case of the quadratic prism and so has larger thermal resistance. Therefore, thermal distribution in the longitudinal direction of the chassis 5 is more even than the case where only the chassis 5 is provided. Furthermore, by designing thermal resistance in a plane direction of the heat spreader 6 to be smaller than thermal resistance in a plane direction of the chassis 5, heat is conducted to the chassis 5 after thermal distribution in the plane direction of the heat spreader 6 gets even. This allows improving heat conduction and heat-releasing performance.

### (II) Method for producing lighting apparatus in accordance with the present embodiment

A method for producing a lighting apparatus in accordance with the present embodiment is the same as the method for producing lighting apparatus in accordance with First Embodiment except that the reinforcing member 18 is connected to the heat spreader 6 in such a manner as to be behind the heat spreader 6.

### [Fourth Embodiment]

The following is a description of the present embodiment, with reference to Figs. 16 to 22 and Fig. 9.

### (I) Configuration of lighting apparatus in accordance with the present embodiment

Fig. 16 is a schematic cross sectional view of a configuration of a liquid crystal display device (image display apparatus) 10 including a backlight apparatus (lighting apparatus) 1 in accordance with the present embodiment. Fig. 17 is a perspective view of a configuration at and around a light source 7 of the backlight apparatus 1 in accordance with the present embodiment. Fig. 18 is a cross sectional view of a configuration at and around the light source 7.

As shown in Figs. 16 to 18, the backlight apparatus 1 in accordance with the present embodiment mainly includes a light source 7 consisting of a plurality of point-light sources (light-emitting elements) 2 and a substrate 3 on which the point-light sources 2 are mounted, a frame (light-source supporter) 18 for fixing the light source 7, a chassis (heat-releasing member) 5 connected to the frame 18, a heat-conducting plate (heat-conducting member) 6 disposed between the light source 7 and the frame 18, and a light-guiding plate (light-guiding member) 22 that emits light received from the light source 7. Possible techniques to connect individual members (parts) include, in addition to a screw clamp, fixing by adhesive tape, adhesive agent etc., fitting, and pressure welding.

Moreover, as shown in Fig. 16, the liquid crystal display device 10 in accordance with the present embodiment mainly includes the backlight apparatus 1, a reflective sheet 21, an optical sheet 23, a liquid crystal panel 24, and a bezel (outer frame) 25.

The backlight apparatus 1 in accordance with the present embodiment is intended to improve heat-conducting performance, when heat from the light source 7 is conducted to the heat-releasing member 5. This intention is achieved by uniquely disposing a plurality of fixing sections 50 that serve to strengthen a contact between the heat-conducting member 6 and the chassis 5. The following details each of the members of the backlight apparatus 1.

### <Light source (light-emitting element and substrate)>

The light source 7 employed in the backlight apparatus 1 of the present embodiment may be constituted by the point-light sources (light-emitting elements) 2 only or may be constituted by mounting the point-light sources 2 on the substrate 3. In the drawings, the light source 7 is constituted by mounting the point-light sources 2 on the substrate 3.

In the backlight apparatus 1 in accordance with the present embodiment, the light source 7 serves as a heat source, which necessitates heat release.

Examples of the point-light sources 2 employed in the backlight apparatus 1 in accordance with the present embodiment include light-emitting diodes (LED) and cold-cathode fluorescent lamp (CCFL). Preferable examples of the light-emitting diode (LED) include a white LED light source, RGB-LED (light-emitting diode made by molding R, G, B chips in one package) light source, a multi-color LED light source, and a laser light source.

The substrate 3 employed in the backlight apparatus 1 in accordance with the present embodiment is not particularly limited as long as the substrate 3 can mount the point-light source 2. A preferable example of the substrate 3 is a metal substrate whose base material is aluminum (A1), copper (Cu) etc. with high thermal conductivity.

In the present embodiment, "mount" means providing an electronic member such as a light source on a substrate. In the present embodiment, the technique to fix a light source etc. on a substrate is not particularly limited, and may be soldering for example.

### <Frame (light-source supporter)>

The frame 18 employed in the backlight apparatus 1 in accordance with the present embodiment is not particularly limited as long the frame 18 is structurally strong. Material preferably used as the frame 18 employed in the backlight apparatus 1 of the present embodiment is an aluminum alloy, a steel plate, stainless steel, or like material. Examples of the aluminum alloy include material such as A5052 (tensile strength of 195 N/mm², thermal conductivity of 138 W/m·K) and A6063 (tensile strength of 185 N/mm², thermal conductivity of 209 W/m·K). Examples of the steel plate include material such as SECC (thermal conductivity of 70 W/m·K) or like material. Examples of the stainless steel include SUS (thermal conductivity of 15 W/m·K) or like material.

The frame 18 employed in the backlight apparatus 1 in accordance with the present embodiment is shaped as a quadrangular prism whose cross section is of a rectangle or a square (plane shown in Fig. 18 and Fig. 19), or is shaped as a polygonal prism whose cross section is L-shaped or U-shaped. The shapes of the frame 18 are specifically described below in "Another Example".

The frame 18 has a plane perpendicular to a light-emitting plane of the light-guiding plate 22. The frame 18 can either surround or not surround the light-guiding plate 22 with the plane perpendicular to the light-emitting plane of the frame 18. Moreover, it is preferable that the frame 18 is disposed as a structure-reinforcing pillar on both ends of the chassis 5, so that the frame 18 faces two planes of the light-guiding plate 22 that are not adjacent to each other.

### <Chassis (heat-releasing member)>

The chassis 5 employed in the backlight apparatus in accordance with the present embodiment is not limited in particular as long as the chassis 5 has heat-releasing performance and is structurally strong. Moreover, material preferably used for the chassis 5 employed in the backlight apparatus 1 in accordance with the present embodiment are, for example, an aluminum alloy, a steel plate, stainless steel or the like. Examples of the aluminum alloy include material such as A5052 (tensile strength of 195 N/mm², thermal conductivity of 138 W/m·K) and A6063 (tensile strength of 185 N/mm², thermal conductivity of 209 W/m·K). Examples of the steel plate include material such as SECC (thermal conductivity of 70 W/m·K) or like material. Examples of the stainless steel include SUS (thermal conductivity of 15 W/m·K) or like material.

### <Heat-conducting plate (heat-conducting member)>

The heat-conducting plate 6 employed in the backlight apparatus 1 of the present embodiment is a heat-conducting plate which has high thermal conductivity. The thermal conductivity of the heat-conducting plate 6 is preferably within a range of not less than 200 W/m·K to not more than 1000 W/m·K. When the thermal conductivity of the heat-conducting plate 6 is less than 200 W/m·K, the conduction of heat becomes insufficient and the heat cannot spread to the heat-releasing member, thereby causing an area contributing to the heat release to be reduced. This is not preferable, since this would cause insufficiency of the heat-releasing performance. On the other hand, the heat-conducting plate 6 having a thermal conductivity greater than 1000 W/m·K is also not preferable due to reasons such as that the cost is expensive, the material is soft and difficult to use, and the material deteriorates by aging.

In the present embodiment, "thermal conductivity" denotes, in the conduction of heat, a value (W/m·K) of an amount of heat flowed in a unit time through a unit area perpendicular to the flow of heat divided by a temperature difference (temperature gradient) per unit length.

Moreover, in the present embodiment, "thermal resistance" is a value representing the difficultness of conducting heat to achieve a certain temperature, and denotes a temperature rising amount (°C/W) with respect to a heat generation amount per unit time.

Moreover, the heat-conducting plate 6 employed in the backlight apparatus 1 of the present embodiment is not required to be structurally strong, and so material having a high thermal conductivity is sufficiently selected. For example, it is preferable to use aluminum, copper, carbon, silver, or the like. Examples of pure aluminum include material such as A1050 (thermal conductivity of 225 W/m·K). Examples of pure copper include materials such as C1100 (thermal conductivity of 391 W/m·K). Other than these, it is also possible to use materials such as a sheet containing fillers such as carbon, silver etc., and a metal plate having a built-in heat pipe.

It is preferable that the thermal conductivity of the heat-conducting plate 6 employed in the backlight apparatus 1 of the present embodiment is greater than the thermal conductivity of the frame 18 and the chassis 15. Moreover, it is preferable that the heat-conducting plate 6 have a thickness of around 0.5 mm to 2 mm.

Examples of the shape of the heat-conducting plate 6 employed in the backlight apparatus 1 of the present embodiment include an L-shape, as shown in Figs. 16 to 18, Fig. 21 and Fig. 22.

In the backlight apparatus 1 in accordance with the present embodiment, the chassis 5 and the heat-conducting plate 6 are in contact with each other. This allows for having a uniform heat distribution in the chassis 5, thereby allowing further improvement in the heat-releasing performance of the backlight apparatus 1.

### <Regarding contact between heat-conducting plate (heat-conducting member) and chassis (heat-releasing member) >

As shown in Figs. 16 to 18 etc., the heat-conducting plate 6 has a first plate section 55 that is in contact with a plane of the frame 18, which plane faces the light-guiding plate 22, and a second plate section 56 that is in contact with a plane of the chassis 5, which plane faces the light-guiding plate 22.

The first plate section 55 and the second plate section 56 can be of any shape as long as they can be in contact with the frame 18 or the chassis 5, and are not limited in particular. For example, the first plate section 55 and the second plate section 56 can be a rectangular plate, a square plate or the like, however they are not limited to these. It is preferable that the first plate section 55 and the second plate section 56 are connected to each other in such a manner that they are substantially perpendicular to each other.

At a plane where the chassis 5 and the second plate section 56 contact each other, a plurality of fixing sections 50 are provided, for strengthening the contact between the chassis 5 and the second plate section 56.

The fixing sections 50 are not limited in their specific configurations in particular, as long as they can strengthen the contact of the chassis 5 with the second plate section 56. For example, the fixing sections 50 are preferably a screw, a weld, a pressure weld, a soldering, an adhesive tape, an adhesive sheet, an adhesive agent, a caulked joint, or a fitted joint. Among the above, the screw is further preferable.

In the lighting apparatus of the present embodiment, the fixing sections 50 are aligned on the plane where the chassis 5 and the second plate section 56 are in contact with each other, so as to form a straight line on each of a plurality of rows along a first direction. Meanwhile, the fixing sections 50 aligned on adjacent two rows of the plurality of rows along the first direction are not arranged to form a straight line along a second direction perpendicular to the first direction. More specifically, it is preferable that the fixing sections 50 are arranged in a staggered manner.

The specific direction of the first direction and the second direction are not limited in particular. For example, the second direction can be a light-entering direction from the point-light source 2 to the light-guiding plate 22; in this case, the first direction is a direction that is orthogonal to the light-entering direction.

The number of rows is not limited in particular as long as it is of a plural number. The lighting apparatus in accordance with the present embodiment can use any number of rows of 2 or more. From a viewpoint that the manufacturing process of the lighting apparatus is made easier by reducing the number of fixing sections 50, it is preferable to have two rows. With the present invention, even if the number of rows were just two rows, it is possible to reduce the thermal resistance between the chassis 5 and the second plate section 56. As a result, the thermal conduction from the point-light sources 2 to the chassis 5 further improves, thereby allowing for improving the heat-releasing performance of the lighting apparatus.

Although spaces between the rows are not particularly limited, it is preferable that a distance between adjacent two rows of the plurality of rows decreases as the rows advance into the second direction. It should be noted that the specific distance between the adjacent two rows is not particularly limited.

The fixing sections 50 aligned on the plurality of rows may be arranged so that three fixing sections 50 are positioned on apexes of an equilateral triangle, respectively. Consider a case of an adjacent first row and a second row, for example. Note that any of the first row and the second row may be closer to the first plate section 55. Here, two fixing sections 50 arranged adjacent to each other on the first row, and one fixing section 50 positioned on the second row at a shortest distance from both the fixing sections 50 on the first row, can be positioned as the apexes of the equilateral triangle.

Although the distance between the fixing sections 50 arranged on one row is not limited in particular, it is preferable that the distance is, for example, between 3 cm to 15 cm, further preferably 6 cm to 12 cm.

The spaces between the fixing sections 50 on one row can be identical or can vary. In a case in which the spaces vary, it is preferable that the spaces between the fixing sections in each row decrease in distance as the row advances into the first direction.

Although the number of fixing sections 50 arranged on individual rows is not limited in particular, it is preferable that a row farthest from the first plate section 55 has the most number of the fixing sections 50 aligned thereon, and a row closest to the first plate section 55 has the least number of the fixing sections 50 aligned thereon. Moreover, it is preferable that the fixing sections 50 arranged on ends of the farthest row from the first plate section 55 are arranged more outside of the fixing sections 50 arranged on ends of the closest row, with respect to the first direction.

The disposition of the fixing sections 50 are described in more details, with reference to Fig. 22. Illustrated in (a) and (b) of Fig. 22 is a schematic view showing an arrangement of the fixing sections 50 in a case where the second plate section 56 is viewed from a light-emitting side. The second plate section 56 has a plurality of fixing sections 50 aligned on two rows running along the first direction. As shown in (b) of Fig. 22, a notch may be provided to the second plate section 56. In this case, the disposition of the fixing sections 50 is determined as described in the present specification upon assumption of a state in which no notch is provided, and thereafter, a desired notch is cut.

For example, in a case of producing a 68-inch LCD-TV based on the lighting apparatus of the present embodiment, it is possible to arrange 29 fixing sections 50 in total on two rows, with respect to one light source. The number of the fixing sections 50 to be arranged on individual ones of the two rows is not limited in particular, however it is possible to arrange 15 fixing sections 50 on one row, and arrange 14 fixing sections 50 on the other row. In this case, it is possible to arrange 15 fixing sections 50 on the row farther from the light source, and arrange 14 fixing sections 50 on the row closer to the light source.

With the foregoing configuration, it is possible to achieve a heat-releasing performance of a substantially same degree as a case in which 72 screws are arranged in one row for a light source of one side. For example, a lighting apparatus which achieved a LED temperature of 34.6 °C (170.8 W) with use of 72 screws can be designed to reach a LED temperature of 34.9 °C (171.6 W) with use of 29 screws.

### <Light-guiding plate (light-guiding member)>

The light-guiding plate 22 employed in the backlight apparatus 1 of the present embodiment may be any member as long as it has (i) a light-incident plane and (ii) a light-emitting plane perpendicular to the light-incident plane, and as long as it is capable of emitting light that is received from the light source 7.

### <Other members>

The liquid crystal display device 10 in accordance with the present embodiment can use, as the reflective sheet 21, the optical sheet 23, the liquid crystal panel 24, and the bezel 25, respective members provided in a conventional liquid crystal display device.

### <Correlation between individual members>

The following details a correlation of individual members in accordance with the backlight apparatus 1 of the present embodiment, with reference to Fig. 19.

As shown in Fig. 19, if the heat-conducting plate 6 were to be omitted by making the frame 18 also have the function of the heat-conducting plate 6, the frame 18 would be required to have both of structural strength and thermal conductivity. However in general, it is difficult to possess both of these two capabilities at the same time. For example, A5052, a typical aluminum alloy serving as a structural member (having excellent structural strength), although has a higher thermal conductivity as compared to SUS or the like, its thermal conductivity is less than half of C1100 which is pure copper. On the other hand, A1050, pure aluminum having excellent thermal conductivity, is insufficient in structural strength to be used as a structural member (is inferior in structural strength). A1050 is inferior to A5052 in all of tensile strength, shear strength, and pressure strength. Moreover, A1050 is inferior to A5052 in its degree of hardness, causing a problem that even if tapping were performed to tighten a screw, the effect of the tapping practically would easily disappear. Therefore, in order to possess both of the structural strength and the thermal conductivity, it is essential to provide a heat-conducting plate 6 separately from the frame 18.

On the other hand, if just the heat-conducting plate 6 is employed from the perspective of thermal conductivity and the frame 18 is omitted by having the chassis 5 guarantee its structural strength, there is a possibility that both the two capabilities can be achieved with a medium to small sized panel suitable for a portable phone, a car navigation system etc., since the required total amount of light from the light source is small. However, with a large-sized display such as a liquid crystal television, a display for digital signage, etc., the weight of the display increases in proportion with its area, and therefore it is necessary to increase the thickness of the chassis 5 in proportion with the large size of the display, to maintain the structural strength just by the chassis 5. This case is not practical in terms of its weight, material costs, processability and the like of the chassis 5. Hence, in order to achieve a sufficient structural strength while keeping the thickness of the chassis 5 be of a practical thickness of around 2 mm or less, it is essential to provide the frame 18 separately from the chassis 5.

Accordingly, by dividing the roles so that the frame 18 serves for the structural strength and the heat-conducting plate 6 serves for the thermal conductivity, and using respective optimal materials for these members, it is possible to make the backlight apparatus exert the most optimum performance as a whole.

Moreover, even with identical edge-light backlights, if their forms change so that, together with the enlargement in size of the display, (i) the entering of light is changed to be from 4 sides to 2 sides, and that (ii) the light being entered from 2 long sides, i.e. top-bottom light entering, changes so that the light is entered from 2 short sides, i.e. left-right light entering, the thermal conditions become difficult to satisfy due to closeness between the heat sources. Consequently, it is further important to divide the roles as one member serving to achieve the structural strength and another member serving to achieve the thermal conductivity as described above, thereby fully making use of their capabilities.

### <Technique of thermal conduction>

The following details a technique of conducting heat in the backlight apparatus 1 of the present embodiment, with reference to Figs. 16 to 18 and (a) and (b) of Fig. 9. The following describes, as an example, a case in which the light source 7 having the point-light sources 2 mounted on the substrate 3 is used as the light source 7.

Heat generated from the point-light sources 2 such as LEDs are firstly conducted to the substrate 3. In a case of a metal substrate, the thickness of the substrate 3 here is generally approximately 1 mm to 2 mm and a length in a long side direction of the substrate 3 is typically 300 mm to 1200 mm. It should be noted however that the long side length is dependent on a screen size since the length thereof is a side length worth of the screen. Furthermore, a plurality of point-light sources 2 are aligned in the long side direction of the substrate 3. The point-light sources 2 are typically sized of a rectangular shape (oblong, square etc.) whose one side is approximately 3 mm to 10 mm.

In this case, the heat is relatively well conducted into the thickness direction of the substrate 3, since the heat is conducted within a range of the size of the point-light sources 2. However, the conducting of heat in the long side direction of the substrate 2 is inferior to the conducting of heat in the thickness direction, since the thermal conduction only proceeds within a range in the thickness direction of the substrate 3. Consequently, thermal distribution appears depending on the position etc. of the LEDs.

More specifically, the LEDs at and around the center are packed together by having other LEDs be present on both sides of the LEDs, thereby making the heat persist within that area. On the other hand, the LEDs disposed on the edges have no heat source on one side, and therefore the heat easily disperses. As a result, the heat generated by the point-light sources 2 is distributed in the long side direction of the substrate 3. Moreover, in general, the LED changes in its light-emitting efficiency in response to its temperature. Accordingly, if all the LEDs are operated while there is a variation in the heat generated state between LEDs, this variation causes generation of luminance unevenness in the backlight apparatus 1 due to the different light-emitting states, which is not preferable at this state. The present embodiment allows for resolving this state. The principle of this is as described below.

According to the embodiment, the substrate 3 is in contact with the frame 18 through the heat-conducting plate 6. The heat-conducting plate 6 is formed of material having high thermal conductivity, as described above. Moreover, the frame 18 is a member having structural strength and so has a larger cross sectional area than that of the substrate 3. Therefore, the thermal resistance in the long side direction of the frame 18 is smaller than that of the substrate 3, and heat is sufficiently diffused in the heat-conducting plate 6 and the frame 18. This as a result achieves an effect of obtaining an even temperature in the substrate 3. Accordingly, variations in operation temperatures of the LEDs are reduced, thereby making it possible to prevent the luminance unevenness of the backlight apparatus 1.

Moreover, by having the heat distributed in an even manner, it is also possible to achieve an effect of reduced thermal resistance. The mechanism that the thermal conduction is poor when the distribution of the heat is uneven can be described as follows.

Illustrated in (a) and (b) of Fig. 9 are cross sectional views of a heat conductor 11 which each mounts a heat source 12 or 13 of a different size on the heat conductor 11. The heat conductors 11 in each of (a) and (b) of Fig. 9 are identical, and thus have the same thermal conductivity. Therefore, thermal resistance per unit area of the heat conductors 11 is also the same.

In the cases where the heat sources 12 and 13 are given the same amount of heat per unit time, heat is conducted in the respective heat conductors 11 in accordance with the 45 degree rule. However, a cross section A of the thermal conductor 11 in (b) of Fig. 9 has a narrower area that contributes to thermal conduction than a cross section A of the thermal conductor 11 in (a) of Fig. 9 has, so that heat is concentrated in the narrower area in (b) of Fig. 9. Since thermal resistance per unit area of the thermal conductor 11 is equal between (a) of Fig. 9 and (b) of Fig. 9, the case of (b) of Fig. 9 with a smaller area contributing to thermal conduction than the case of (a) of Fig. 9 has higher thermal resistance than the case of (a) of Fig. 9. This shows that the difference in temperature between the upper side and the lower side of the thermal conductor 11 is larger in the case of (b) of Fig. 9 than the case of (a) of Fig. 9. This results in poor thermal conduction in the case of (b) of Fig. 9.

Hence, it is found that, in improving the thermal conduction of the heat conductor 11 when a same amount of heat is applied per unit time, heat is better conducted by broadening the area to which heat is applied for conducting the heat. Moreover, it can be observed that the heat is best conducted when the distribution of the heat is even.

According to the present embodiment, the heat conducted from the substrate 3 to the heat-conducting plate 6 and the frame 18 is conducted to the chassis 5 in an evenly-distributed state. Hence, the heat is conducted to the chassis 5 in a good heat-conducted state. With the heat being well conducted to the chassis 5, the temperature of the chassis 5 can increase largely. This hence allows for improving efficiency of heat exchange since the temperature is largely different from the atmospheric temperature. As a result, the heat-releasing performance of the backlight apparatus 1 improves. Furthermore, by taking a configuration in which the thermal resistance in the plane direction of the heat-conducting plate 6 is smaller than the thermal resistance in the plane direction of the chassis 5, the heat distribution in the plane direction of the chassis 5 becomes even. This hence allows for improving the heat-releasing performance.

It is desirable to insert a thermal conduction assisting member such as resin sheet, metal sheet, and grease between individual members of the backlight apparatus 1, because the thermal conduction assisting member allows further dropping thermal resistance of the interface.

### <Another Example>

Another Example of the backlight apparatus 1 in accordance with the present embodiment is a backlight apparatus whose frame 18 is modified in its shape. The following specifically explains this with reference to (a) and (b) of Fig. 20 and Fig. 21.

By having the shape of the frame 18 be of a polygonal prism shape having a U-shaped cross section as shown in (a) and (b) of Fig. 20, or by having the shape of the frame 18 be of a polygonal prism shape having a L-shaped cross section as illustrated in Fig. 21, it is possible to reduce material costs as compared to the frame 18 shaped of a quadrangular prism having an oblong or a square cross section. Furthermore, bending of a flat plate to a U-shape, L-shape or the like allows for improving mechanical strength of the frame 18.

Namely, it is preferable to arrange the lighting apparatus in accordance with the present embodiment such that the light-source supporting member has a cross section shaped of a rectangle or a square, the cross section being taken on a flat plane perpendicular to both (i) a first plane where the light-source supporting member contacts the heat-conducting member and (ii) a second plane where the light-source supporting member contacts the heat-releasing member. Moreover, it is also preferable to arrange the lighting apparatus in accordance with the present embodiment such that the light-source supporter has a cross section shaped of a L-shape or a U-shape, the cross section being taken on a flat plane perpendicular to both (i) a first plane where the light-source supporter contacts the heat-conducting member and (ii) a second plane where the light-source supporter contacts the heat-releasing member.

The lighting apparatus in accordance with the present embodiment can also be configured as described below.

The lighting apparatus in accordance with the present embodiment includes: a chassis; a substrate which is disposed substantially perpendicular to a plane of the chassis and whose one side being provided with a point-light source; and a heat-conducting plate consisting of two plate sections of (i) a first plate section connected to the substrate and (ii) a second plate section connected to the chassis, the second plate section extending into a light-emitting direction, the second plate section and the chassis being fixed by fixing sections, the fixing sections fixing the second plate section and the chassis at positions arranged in a staggered manner having two or more rows that are substantially orthogonal to the light-emitting direction.

It is preferable to arrange the lighting apparatus of the present embodiment that a row farther from the substrate has a greater number of fixing sections than a row closer to the substrate has. Note that in a case where a notch is cut to the second plate section, the number of fixing sections will be calculated upon assumption of a state having no notch provided thereto.

### (II) Method for producing lighting apparatus in accordance with the present embodiment

The lighting apparatus in accordance with the present embodiment is produced by connecting the light source 7 (point-light sources 2 and the substrate 3), the heat-conducting plate 6, the frame 18, and the chassis 5 in this order. Thereafter, the light guide plate 22 is positioned. Possible technique to connect individual members include, in addition to screw clamp, fixing by adhesive tape, adhesive agent etc., fitting, and pressure welding.

### [Preferable modes of the present invention]

It is preferable to arrange the lighting apparatus of the present invention such that the light-source supporter and the plate section are formed integrally.

With the arrangement, the lighting apparatus of the present invention can reduce the interfaces between individual members. Consequently, the lighting apparatus of the present invention can further efficiently conduct heat to the heat-releasing member, thereby further improving heat-releasing performance.

Furthermore, it is preferable to arrange the lighting apparatus of the present invention so as to further include a reinforcing member for reinforcing the heat-conducting member, a plane of the reinforcing member which plane faces the light-incident plane contacting a plane opposite to the plane of the heat-conducting member which plane faces the light-incident plane, and a plane of the reinforcing member which plane faces the heat-releasing member contacting the plane of the heat-releasing member which plane faces the light guide member.

The arrangement allows the lighting apparatus of the present invention to have improved structural strength.

Furthermore, it is preferable to arrange the lighting apparatus of the present invention such that when both of the light-incident plane and the light-emitting plane are positioned to be perpendicular to a horizontal plane, the centroid deviates in a direction opposite to a gravitational direction.

Consequently, in the lighting apparatus of the present invention, heat is easier to be released from the upper side. Therefore, a display apparatus whose display plane is positioned vertically can efficiently release heat from the upper side where heat is retained.

Furthermore, it is preferable to arrange the lighting apparatus of the present invention such that thermal resistance per unit length of the heat-conducting member in a direction along a contact plane between the heat-conducting member and the heat-releasing member is smaller than thermal resistance per unit length of the heat-releasing member in a direction along the contact plane.

Consequently, in the lighting apparatus of the present invention, the heat-conducting member can assist thermal conduction in the direction inside the heat-releasing member. As a result, the lighting apparatus of the present invention can have further even thermal distribution at the heat releasing member, thereby further improving heat-releasing performance.

Furthermore, it is preferable to arrange the lighting apparatus of the present invention such that the heat-conducting member has thermal conductivity of not less than 200 W/m·K and not more than 1000 W/m·K.

Consequently, in the lighting apparatus of the present invention, the heat-conducting member can efficiently diffuse heat. Therefore, in the lighting apparatus, heat can be further efficiently conducted to the heat-releasing member.

Furthermore, the lighting apparatus of the present invention may be arranged such that the second direction is a direction in which light is incident from the light source to the light guide member.

Furthermore, it is preferable to arrange the lighting apparatus of the present invention such that the fixing sections being made of screw clamps.

With the arrangement, the contact between the heat-releasing member and the second plate section can be further strengthened, so that thermal resistance between the heat-releasing member and the second plate section can be further reduced.

Furthermore, it is more preferable to arrange the lighting apparatus of the present invention such that a row farther from the first plate section has a more number of fixing sections than a row closer to the first plate section, and a row farthest from the first plate section has the most number of the fixing sections aligned thereon, and a row closest to the first plate section has the least number of the fixing sections aligned thereon.

With the arrangement, the contact between the heat-releasing member and the second plate section can be further strengthened by increasing the number of fixing sections farther from the first plate section, so that thermal resistance between the heat-releasing member and the second plate section can be further reduced.

Furthermore, it is preferable to arrange the lighting apparatus of the present invention such that spaces between the fixing sections in each row along the first direction decrease in distance as the row advances into the first direction.

With the arrangement, the contact between the heat-releasing member and the second plate section can be further strengthened, so that thermal resistance between the heat-releasing member and the second plate section can be further reduced.

Furthermore, it is preferable to arrange the lighting apparatus of the present invention such that a distance between adjacent two rows of the plurality of rows decreases as the rows advance into the second direction.

With the arrangement, the contact between the heat-releasing member and the second plate section can be further strengthened, so that thermal resistance between the heat-releasing member and the second plate section can be further reduced.

Furthermore, the image display apparatus of the present invention includes the aforementioned lighting apparatus.

Therefore, the image display apparatus of the present invention can subdue luminance unevenness of a light source and improve heat-releasing performance while maintaining structural strength, so that the image display apparatus can have decreased temperature of the light source and improved light emission efficiency. Furthermore, the image display apparatus of the present invention can subdue increase in temperature of a device even when the image display apparatus operates with high luminance in order to illuminate a large screen, so that it can operate as a large and thin image display apparatus to which light is incident via its side.

### [Other Embodiments]

The lighting apparatus in accordance with the present embodiment may be arranged to be a lighting apparatus, including: a plurality of point-light sources serving as heat sources; a substrate on which the plurality of point-light sources are aligned in one row or a plurality of rows; a heat spreader serving as a heat-conducting member; and a chassis serving as a heat-releasing member, the lighting apparatus being of a side-incident edge-light type in which the plurality of point-light sources are aligned in rows vertically, the plurality of point-light sources contacting the chassis via the substrate and the heat spreader in such a manner as to carry out thermal conduction via the substrate and the heat spreader, the heat spreader including a plane parallel to the chassis, and when the plane is bisected along a long side direction of the substrate into an upper part which is a first plane and a lower part which is a second plane, the first plane having a larger area than the second plane, and the longest part of the first plane being longer than the longest part of the second plane in a lateral direction of the plane parallel to the chassis.

Furthermore, the lighting apparatus in accordance with the present embodiment may be arranged to be a lighting apparatus, including: a plurality of point-light sources serving as heat sources; a substrate on which the plurality of point-light sources are aligned in one row or a plurality of rows; a heat spreader serving as a heat-conducting member; and a chassis serving as a heat-releasing member, the lighting apparatus being of a side-incident edge-light type in which the plurality of point-light sources are aligned in rows vertically, the plurality of point-light sources contacting the chassis via the substrate and the heat spreader in such a manner as to carry out thermal conduction via the substrate and the heat spreader, the heat spreader including a plane perpendicular to the chassis, and when the plane is bisected along a long side direction of the substrate into an upper part which is a first plane and a lower part which is a second plane, the first plane having a larger area than the second plane, and the longest part of the first plane being longer than the longest part of the second plane in a lateral direction of a plane parallel to the chassis.

The present invention is not limited to the description of the embodiments above, but may be altered by a skilled person within the scope of the claims. An embodiment based on a proper combination of technical means disclosed in different embodiments is encompassed in the technical scope of the present invention.

### Industrial Applicability

The present invention is preferable applicable to a plane-emitting backlight apparatus included in a liquid crystal display apparatus such as a mobile phone, a notebook computer, and a television, and particularly to a side-edge large backlight apparatus including point-light sources such as LEDs.

### Reference Signs List

1 Backlight apparatus (lighting apparatus)
2 Point-light source (light-emitting element, light source)
3 Substrate
5 Chassis (heat-releasing member)
6 Heat spreader (heat-conducting member, heat-conducting plate)
7 Light source
10 Liquid crystal display device (image display apparatus)
11 Heat conducting member
12 Heat source
13 Heat source
16 Heat-conducting plate (plate section)
17 Frame (light-source supporter)
18 Reinforcing member (light source supporting member, frame)
21 Reflective sheet
22 Light guide plate (light guide member)
23 Optical Sheet
24 Liquid crystal panel
25 Bezel (outer frame)
50 Fixing section
55 First plate section
56 Second plate section

## Claims

1. A lighting apparatus, comprising:
a light source;
a light guide member having a light-incident plane and a light-emitting plane perpendicular to the light-incident plane;
a heat-releasing member positioned at a backside of the light guide member so as to face the light-emitting plane; and
a heat-conducting member for conducting heat from the light source to the heat-releasing member,
the heat-conducting member including: a light-source supporter having a plane facing the light-incident plane; and a plate section having a plane facing the light-emitting plane and a plane facing the heat-releasing member, the light-source supporter being adjacent to the plate section,
on the light-source supporter, the light source being positioned on the plane facing the light-incident plane in such a manner as to face the light-incident plane,
the plane of the plate section which plane faces the heat-releasing member contacting a plane of the heat-releasing member which plane faces the light guide member, and
a centroid of the plate section deviating along a direction parallel to both of the light-incident plane and the light-emitting plane.

2. The lighting apparatus as set forth in claim 1, wherein the light-source supporter and the plate section are formed integrally.

3. The lighting apparatus as set forth in claim 2, further comprising a reinforcing member for reinforcing the heat-conducting member,
a plane of the reinforcing member which plane faces the light-incident plane contacting a plane opposite to the plane of the heat-conducting member which plane faces the light-incident plane, and
a plane of the reinforcing member which plane faces the heat-releasing member contacting the plane of the heat-releasing member which plane faces the light guide member.

4. The lighting apparatus as set forth in any one of claims 1 to 3, wherein when both of the light-incident plane and the light-emitting plane are positioned to be perpendicular to a horizontal plane, the centroid deviates in a direction opposite to a gravitational direction.

5. The lighting apparatus as set forth in any one of claims 1 to 4, wherein thermal resistance per unit length of the heat-conducting member in a direction along a contact plane between the heat-conducting member and the heat-releasing member is smaller than thermal resistance per unit length of the heat-releasing member in a direction along the contact plane.

6. The lighting apparatus as set forth in any one of claims 1 to 5, wherein the heat-conducting member has thermal conductivity of not less than 200 W/m·K and not more than 1000 W/m·K.

7. A lighting apparatus, comprising:
a light source;
a light guide member having a light-incident plane and a light-emitting plane perpendicular to the light-incident plane;
a light source supporting member for positioning the light source in such a manner that the light source faces the light-incident plane;
a heat-releasing member which is positioned at a backside of the light guide member so as to face the light-emitting plane and which is connected with the light source supporting member; and
a heat-conducting member which contacts the light source supporting member and the heat-releasing member,
the heat-conducting member including: a first plate section contacting a plane of the light source supporting member which plane faces the light guide member; and a second plate section contacting a plane of the heat-releasing member which plane faces the light guide member,
the light source being positioned, via the first plate section, on a plane of the light source supporting member which plane faces the light-incident plane,
at a contact plane between the heat-releasing member and the second plate section, there being provided a plurality of fixing sections for strengthening a contact between the heat-releasing member and the second plate section,
the fixing sections being aligned on the contact plane so as to form a straight line on each of a plurality of rows along a first direction,
fixing sections aligned on adjacent two rows of the plurality of rows being not arranged to form a straight line along a second direction perpendicular to the first direction.

8. The lighting apparatus as set forth in claim 7, wherein the second direction is a direction in which light is incident from the light source to the light guide member.

9. The lighting apparatus as set forth in claim 7 or 8, wherein the fixing sections being made of screw clamps.

10. The lighting apparatus as set forth in any one of claims 7 to 9, wherein a row farthest from the first plate section has the most number of the fixing sections aligned thereon, and a row closest to the first plate section has the least number of the fixing sections aligned thereon.

11. The lighting apparatus as set forth in any one of claims 7 to 10, wherein spaces between the fixing sections in each row along the first direction decrease in distance as the row advances into the first direction.

12. The lighting apparatus as set forth in any one of claims 7 to 11, wherein a distance between adjacent two rows of the plurality of rows decreases as the rows advance into the second direction.

13. An image display apparatus, comprising a lighting apparatus as set forth in any one of claims 1 to 12.
